# EUROPEAN PATENT APPLICATION

(11) **EP 4 429 057 A2**
(43) Date of publication of application: **11.09.2024**
(21) Application number: 24154750.4
(22) Date of filing: 30.01.2024
(51) Int. Cl.: H02J 1/10, G02B 27/01, G06F 1/26, G06F 3/01, H02J 1/14, H02J 7/00, H02J 7/34

(54) **ASSISTANT SYSTEMS AND METHODS FOR HANDLING PEAK POWER DEMANDS IN AN EXTENDED-REALITY SYSTEM**

(30) Priority: 06.03.2023 US 202318179220
(71) Applicant: Meta Platforms Technologies, LLC, Menlo Park, CA 94025 (US)
(72) Inventor: Lin, Zhujie, Menlo Park, CA 94025 (US); Hayenga, Mark, Menlo Park, CA 94025 (US)
(74) Representative: Murgitroyd & Company

(57) **Abstract**

The disclosed extended-reality system may include (1) a power rail, (2) a load electrically coupled to the power rail, (3) a primary energy-storing element operable to provide power to the load via the power rail, (4) a bi-directional converter electrically coupled to the power rail, and (5) a secondary energy-storing element electrically coupled to the bi-directional converter and operable to (A) discharge by supplying power to the power rail through the bi-directional converter when a voltage of the power rail is at or below a discharging threshold value and (B) charge by extracting power from the power rail through the bi-directional converter when the voltage of the power rail is at or above a charging threshold value. Various other apparatus, methods, systems, and computer-readable media are also disclosed.

## Description

### TECHNICAL FIELD

The present disclosure is generally directed to assistant apparatus, systems, and methods for handling peak-power demands.

### BACKGROUND

Augmented-Reality (AR) systems, Virtual-Reality (VR) systems, and Mixed-Reality (MR) systems, collectively referred to as Extended-Reality (XR) systems, are a budding segment of today's personal computing systems. Conventional XR systems, and many other types and forms of modern computing systems, are often limited by the ability of their power systems to satisfy peak power demands of their various subsystems. Small battery systems, such as those found in conventional XR systems, often have extremely high effective series resistances. In some computing systems, these high resistances may prevent batteries from providing the peak power demanded by many of the systems' power-hungry subsystems (e.g., display subsystems, wireless-communications subsystems, audio subsystems, and/or graphics-processing subsystems), especially when the subsystems require a certain level of input voltage to operate properly. If a system's peak power demand exceeds a battery's capabilities, the system and/or one or more of its subsystems may experience premature brownout. In some situations, peak power bottlenecks may be exacerbated by external and/or internal factors such as low temperatures and high battery cycle count, which may increase battery resistance and/or reduce power-delivery capabilities.

### SUMMARY

The present invention provides a system, a method and an apparatus as defined in the appended claims.

In accordance with a first aspect, there is provided an extended-reality system comprising:
a power rail;
a load electrically coupled to the power rail;
a primary energy-storing element operable to provide power to the load via the power rail;
a bi-directional converter electrically coupled to the power rail; and
a secondary energy-storing element electrically coupled to the bi-directional converter and operable to:
discharge by supplying power to the power rail through the bi-directional converter when a voltage of the power rail is at or below a discharging threshold value; and
charge by extracting power from the power rail through the bi-directional converter when the voltage of the power rail is at or above a charging threshold value.

The discharging threshold value or the charging threshold value may be a predetermined fixed threshold value.

The primary energy-storing element may comprise a battery having an internal resistance. The secondary energy-storing element may comprise one or more capacitors. The discharging threshold value may be variable and based at least in part on a voltage of the battery that excludes a voltage drop resulting from the internal resistance.

The extended-reality system may further comprise a threshold controller operable to set the discharging threshold value based at least in part on the greater of:
a difference between the voltage of the battery and a predetermined delta; or
a predetermined minimum threshold value.

The secondary energy-storing element may comprise one or more capacitors. The extended-reality system may further comprise a threshold controller operable to:
monitor a voltage of the one or more capacitors; and
set the discharging threshold value based at least in part on a sum of:
   a predetermined minimum voltage; and
   a product of a predetermined factor and the voltage of the one or more capacitors.

The power rail may comprise a segment between the bi-directional converter and the load. The segment may have a direct-current resistance. The voltage of the power rail may be a voltage at an end of the segment closest to the bi-directional converter. The extended-reality system may further comprise a threshold controller operable to:
monitor a current in the segment;
monitor the voltage at the end of the segment closest to the bi-directional converter; and
set the discharging threshold value based at least in part on a sum of:
   a predetermined voltage; and
   a product of the current in the segment and the direct-current resistance.

The power rail may comprise a segment between the bi-directional converter and the load. The segment may have a direct-current resistance. The voltage of the power rail may be a voltage at an end of the segment closest to the bi-directional converter. The extended-reality system may further comprise a threshold controller operable to:
monitor a current in the segment;
monitor the voltage at the end of the segment closest to the bi-directional converter; and
set the charging threshold value based at least in part on a difference between:
   a predetermined voltage; and
   a product of the current in the segment and the direct-current resistance.

The primary energy-storing element may comprise a battery. The extended-reality system may further comprise a linear charger operable to charge the battery. The linear charger may have a dropout voltage. The bi-directional converter may supply an input voltage to the linear charger substantially equal to a sum of the dropout voltage of the linear charger and a voltage of the battery.

The primary energy-storing element may comprise a battery. The bi-directional converter may be operable to supply a constant current or a constant voltage to charge the battery.

The extended-reality system may further comprise:
an eyewear front frame; and
an eyewear temple coupled to the eyewear front frame, wherein:
   the load comprises a display element integrated into the eyewear front frame;
   the primary energy-storing element comprises a battery integrated into a distal portion of the eyewear temple; and
   the power rail extends from the battery through the eyewear temple to the display element.

The extended-reality system may further comprise:
an eyewear front frame; and
an eyewear temple coupled to the eyewear front frame, wherein:
   the load comprises a display element integrated into the eyewear front frame;
   the bi-directional converter is integrated into a distal portion of the eyewear temple; and
   the power rail extends from the bi-directional converter through the eyewear temple to the display element.

The extended-reality system may further comprise an eyewear front frame, wherein:
the load comprises a display element integrated into a left portion of the eyewear front frame;
the secondary energy-storing element comprises a bank of capacitors integrated into a right portion of the eyewear front frame; and
the power rail extends from the display element across a bridge portion of the eyewear front frame to the bank of capacitors.

The extended-reality system may further comprise an audio subsystem, wherein:
the secondary energy-storing element comprises one or more capacitors; and
the one or more capacitors form a portion of the audio subsystem.

In accordance with a second aspect, there is provided a computer-implemented method comprising:
monitoring at least one attribute of a power subsystem of an extended-reality system comprising:
a power rail;
a load electrically coupled to the power rail;
a primary energy-storing element operable to provide power to the load via the power rail;
a bi-directional converter electrically coupled to the power rail; and
a secondary energy-storing element electrically coupled to the bi-directional converter and operable to:
   discharge by supplying power to the power rail through the bi-directional converter when a voltage of the power rail is at or below a discharging threshold value; and
   charge by extracting power from the power rail through the bi-directional converter when the voltage of the power rail is at or above a charging threshold value; and
   setting at least one of the discharging threshold value or the charging threshold value based at least in part on the at least one attribute of the power subsystem.

The primary energy-storing element may comprise a battery having an internal resistance. The at least one attribute of the power subsystem may comprise a voltage of the battery that excludes a voltage drop resulting from the internal resistance. Setting at least one of the discharging threshold value or the charging threshold value may comprise setting the discharging threshold value equal to a difference between the voltage of the battery and a predetermined delta.

The secondary energy-storing element may comprise one or more capacitors. Monitoring the at least one attribute of the power subsystem of the extended-reality system may comprise monitoring a voltage of the one or more capacitors. Setting at least one of the discharging threshold value or the charging threshold value may comprise setting the discharging threshold value based at least in part on a sum of:
a predetermined minimum voltage; and
a product of a predetermined factor and the voltage of the one or more capacitors.

The power rail may comprise a segment between the bi-directional converter and the load. The segment may have a direct-current resistance. The voltage of the power rail may be a voltage at an end of the segment closest to the bi-directional converter. Monitoring the at least one attribute of the power subsystem of the extended-reality system may comprise:
monitoring a current in the segment; and
monitoring the voltage at the end of the segment closest to the bi-directional converter; and
setting at least one of the discharging threshold value or the charging threshold value may comprise setting the discharging threshold value based at least in part on a sum of:
   a predetermined voltage; and
   a product of the current in the segment and the direct-current resistance.

The power rail may comprise a segment between the bi-directional converter and the load. The segment may have a direct-current resistance. The voltage of the power rail may be a voltage at an end of the segment closest to the bi-directional converter. Monitoring the at least one attribute of the power subsystem of the extended-reality system may comprise:
monitoring a current in the segment; and
monitoring the voltage at the end of the segment closest to the bi-directional converter; and
setting at least one of the discharging threshold value or the charging threshold value comprises setting the charging threshold value based at least in part on a difference between:
   a predetermined voltage; and
   a product of the current in the segment and the direct-current resistance.

In accordance with a third aspect, there is provided an apparatus comprising:
a bi-directional converter;
a power-rail connector electrically coupled to the bi-directional converter and configured to:
   supply power from the bi-directional converter to a power rail; and
   supply power to the bi-directional converter from the power rail;
   a power-storage connector electrically coupled to the bi-directional converter and configured to:
      supply power from the bi-directional converter to an energy-storing element; and
      supply power to the bi-directional converter from the energy-storing element; and
      a threshold controller operable to:
         direct power from the power-storage connector to the power-rail connector through the bi-directional converter when a voltage of the power rail is at or below a discharging threshold value; and
         direct power from the power-rail connector to the power-storage connector through the bi-directional converter when the voltage of the power rail is at or above a charging threshold value.

The threshold controller may be further operable to update the discharging threshold value or the charging threshold value.

It will be appreciated that any features described herein as being suitable for incorporation into one or more aspects are intended to be generalizable across any and all aspects described herein. Other aspects of the present disclosure can be understood by those skilled in the art in light of the description, the claims and the drawings. The foregoing general description and the following detailed description are exemplary and explanatory only and are not restrictive of the claims.

### BRIEF DESCRIPTION OF THE DRAWINGS

FIG. 1 is a block diagram of an example apparatus that may be capable of handling peak power demands with the assistance of a peak shaver in accordance with various embodiments of the present disclosure.
FIG. 2A and FIG. 2B are illustrations of two example states of the example apparatus of FIG. 1 in accordance with various embodiments of the present disclosure.
FIG. 3 is an illustration of an example sequence of power demands along with corresponding capacitor and power-rail voltages in accordance with an embodiment of the present disclosure.
FIG. 4 is an illustration of an example sequence of power supplies and demands along with corresponding capacitor and power-rail voltages in accordance with an embodiment of the present disclosure.
FIG. 5 is an illustration of example peak-shaver voltage thresholds along with example battery voltages in accordance with an embodiment of the present disclosure.
FIG. 6 is an illustration of an example capacitor-tracking peak-shaver voltage threshold in accordance with an embodiment of the present disclosure.
FIG. 7 is an illustration of an example sequence of power supplies and demands along with corresponding capacitor and power-rail voltages in accordance with an embodiment of the present disclosure.
FIG. 8 is an illustration of an example circuit diagram of the example apparatus of FIG. 1 in accordance with one embodiment of the present disclosure.
FIG. 9 is an illustration of an example sequence of capacitor voltages, peak-shaver voltages, and power-rail voltages in accordance with an embodiment of the present disclosure.
FIG. 10 is an illustration of example battery and programable-power-supply voltages in accordance with an embodiment of the present disclosure.
FIG. 11 is a flow diagram of an exemplary method for handling peak power demands in accordance with various embodiments of the present disclosure.
FIG. 12 is an illustration of an example circuit diagram of the example apparatus of FIG. 1 in accordance with one embodiment of the present disclosure.
FIG. 13 is an illustration of exemplary augmented-reality glasses that may be used in connection with embodiments of this disclosure.
FIG. 14 is an illustration of an exemplary virtual-reality headset that may be used in connection with embodiments of this disclosure.
FIG. 15 is an illustration of exemplary haptic devices that may be used in connection with embodiments of this disclosure.
FIG. 16 is an illustration of an exemplary virtual-reality environment according to embodiments of this disclosure.
FIG. 17 is an illustration of an exemplary augmented-reality environment according to embodiments of this disclosure.
FIG. 18 an illustration of an exemplary system that incorporates an eye-tracking subsystem capable of tracking a user's eye(s).
FIG. 19 is a more detailed illustration of various aspects of the eye-tracking subsystem illustrated in FIG. 18.
FIGS. 20A and 20B are illustrations of an exemplary human-machine interface configured to be worn around a user's lower arm or wrist.
FIGS. 21A and 21B are illustrations of an exemplary schematic diagram with internal components of a wearable system.
FIG. 22 is an illustration of an exemplary smartwatch according to embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications and alternatives falling within the scope of the appended claims.

### DETAILED DESCRIPTION

The present disclosure is generally directed to assistant apparatus, systems, and methods for handling peak-power demands. In some embodiments, an assistant peak shaver may be incorporated into an XR system, or any other type or form of computing system, with power-delivery subsystems that are unable, at least at certain times or under certain circumstances, to handle peak power demands of the XR system's other subsystems. In some embodiments, an assistant peak shaver may turn what would otherwise be a peak power demand on a power-delivery subsystem into an averaged power demand on the power-delivery subsystem by being a primary provider of power in excess of the power-deliver subsystem's power-delivering capabilities. As will be explained in greater detail below, embodiments of the present disclosure may include one or more secondary energy-storing devices (e.g., a bank of capacitors) that may be discharge in parallel with one or more primary energy-storing devices (e.g., a battery) to sustain high peak loads in excess of the primary energy-storing devices' power-delivery capability. The one or more secondary energy-storing devices may then be charged when the power demand on the primary energy-storing devices is low with the available excess power above the primary energy-storing devices' power-delivery capability. Embodiments of the present disclosure may enable a primary energy-storing device to be drawn to a much lower state of charge before any brownout event.

Features from any of the embodiments described herein may be used in combination with one another in accordance with the general principles described herein. These and other embodiments, features, and advantages will be more fully understood upon reading the following detailed description in conjunction with the accompanying drawings and claims.

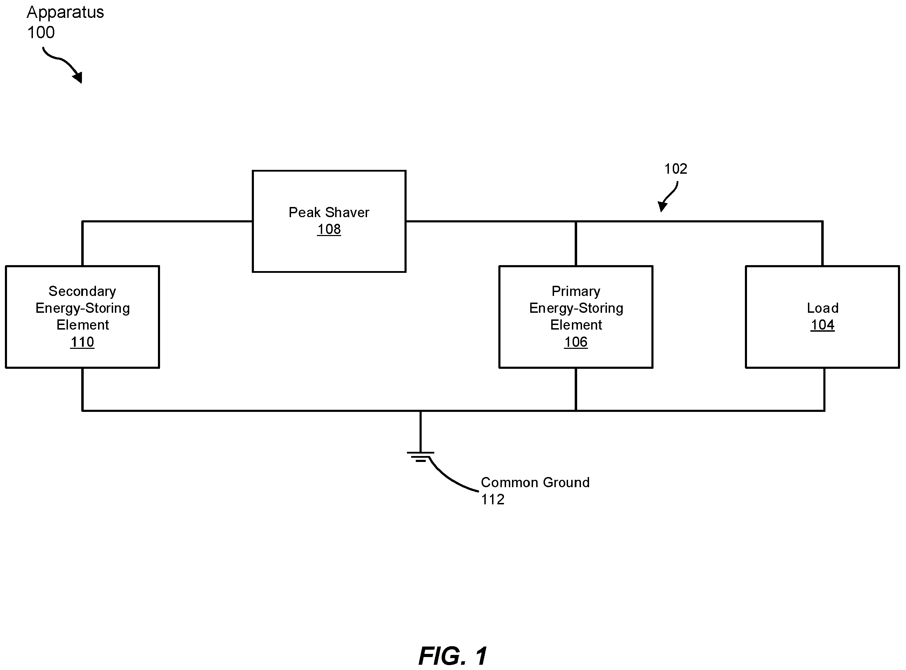

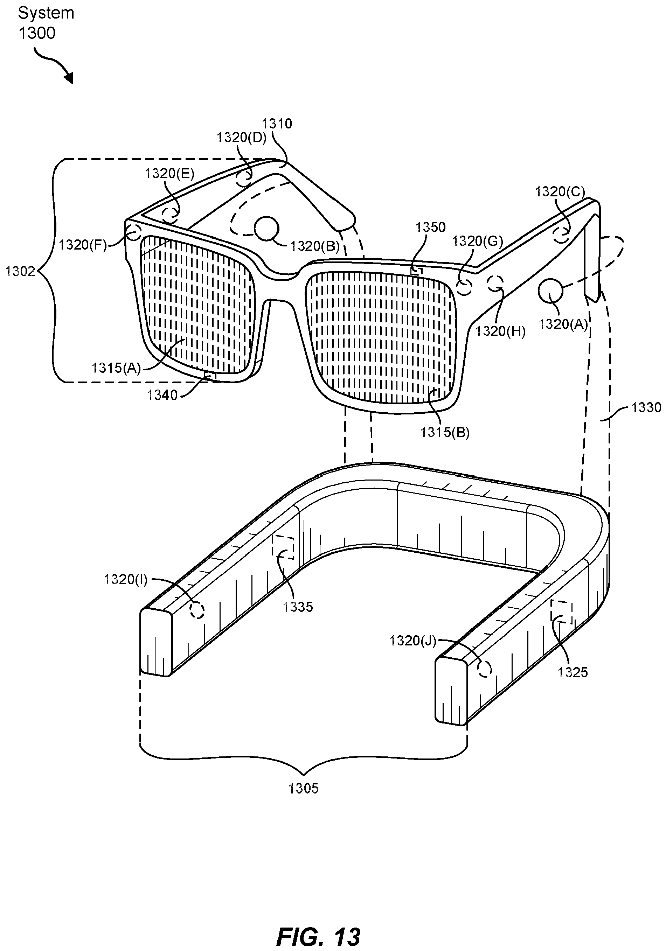

The following will provide, with reference to FIGS. 1-12, detailed descriptions of example peak-shaver apparatus, systems, and methods. With reference to FIGS. 13-22, the following will provide detailed descriptions of various systems and components that may implement embodiments of the present disclosure.

FIG. 1 is a block diagram of an example apparatus 100 that is configured to handle peak power demands using an assistant parallel peak shaver. As illustrated in FIG. 1, apparatus 100 may include a power rail 102 that electrically couples a load 104, a primary energy-storing element 106, and a peak shaver 108 in parallel (e.g., relative to a common ground 112). Apparatus 100 may also include a secondary energy-storing element 110 that is electrically coupled to power rail 102 through peak shaver 108.

Apparatus 100 may represent or include all or a portion of any of the apparatus and systems disclosed herein (e.g., those illustrated in FIGS. 13-22). Power rail 102 may represent or include any type or form of electrical conductor capable of transmitting power to connected devices. In some examples, power rail 102 may represent or include a supply rail (commonly referred to as VSYS) that carries a system current to and from other electronic components of apparatus 100. Load 104 may represent or include any type or form of electrical load that consumes electric power from power rail 102. Examples of load 104 include, without limitation, display loads, audio loads, data-processing loads, data-storage loads, sensor loads, input/output loads, haptic loads, communication loads, variations or combinations of one or more of the same, or any other type or form of load that may consume power from an energy-storing device. In some examples, load 104 may represent a portion of a display subsystem, an audio subsystem, a data-processing subsystem, a data-storage subsystem, a sensor subsystem, an input/output subsystem, a haptic subsystem, a communication subsystem, variations or combinations of one or more of the same, or any other type or form of self-contained, autonomous, or semi-autonomous component or components of apparatus 100.

In some examples, load 104 may represent a load that consumes power irregularly over time. For example, load 104 may represent a display element that consumes a relatively large amount of power while refreshing and a relatively small amount of power between periods of refreshing. In another example, load 104 may represent an element of an audio subsystem, or any other type or form of input/output device, whose power demand may be based on a varying input signal. In some examples, load 104 may represent a device that is capable of being in one of two or more states that consume different amounts of power. In at least some examples, a power demand of load 104 may be, at least sometimes, periodic and/or predictable. In other examples, the power demand of load 104 may be, at least sometimes, irregular and/or unpredictable.

Primary energy-storing element 106 and/or secondary energy-storing element 110 may represent or include any type or form of energy storage. In some examples, primary energy-storing element 106 and/or secondary energy-storing element 110 may represent or include a device or a collection of devices that store electrical energy, electromagnetic energy, electrochemical energy, and/or any other type or form of energy. Examples of primary energy-storing element 106 and/or secondary energy-storing element 110 include, without limitation, batteries, capacitors, supercapacitors, inductors, and/or variations or combinations of one or more of the same. In some examples, secondary energy-storing element 110 may represent a portion of a parallel peak-shaver subsystem of apparatus 100 that also includes peak shaver 108. In some examples, peak shaver 108 and/or secondary energy-storing element 110 may represent a portion of a display subsystem, an audio subsystem, a data-processing subsystem, a data-storage subsystem, a sensor subsystem, an input/output subsystem, a haptic subsystem, a communication subsystem, variations or combinations of one or more of the same, or any other type or form of self-contained, autonomous, or semi-autonomous component or components of apparatus 100.

In some examples, primary energy-storing element 106 may have or exhibit an internal resistance to current flow. As the current and/or power supplied by primary energy-storing element 106 to load 104 increases, the voltage dropped across the internal resistance may also increase, thus resulting in a decrease in the voltage measured on power rail 102. In the absence of supplemental current and/or power provided by peak shaver 108, a sufficiently high power demand from load 104 may cause the voltage on power rail 102 to drop below the operational requirements of load 104, which may result in system brownout. For at least this reason, peak shaver 108 may supply or extract current and/or power to and from power rail 102 in order to control or regulate a voltage of primary energy-storing element 106 or power rail 102 as the power demands from load 104 change.

Peak shaver 108 may represent or include any type or form of device that supplements power to power rail 102 in parallel with primary energy-storing element 106, especially during periods of time in which the power demanded by load 104 exceeds the power-delivering capabilities of primary energy-storing element 106. Additionally or alternatively, peak shaver 108 may represent or include any type or form of device that draws power from primary energy-storing element 106 via power rail 102, especially during periods of time in which the power demanded by load 104 is lower than the power-delivering capabilities of primary energy-storing element 106. In some examples, peak shaver 108 may represent or include a bi-directional converter (e.g., a bi-directional direct-current-to-direct-current (DC-to-DC) converter) across which current may flow between power rail 102 and secondary energy-storing element 110. In some examples, peak shaver 108 may represent or include a bi-directional voltage regulator, a bi-directional switching regulator, a bi-directional buck converter, a bi-directional boost converter, a bi-directional buck-boost converter, and/or a pair of omni-directional converters (e.g., a pair consisting of an omni-directional buck converter and an omni-directional boost converter).

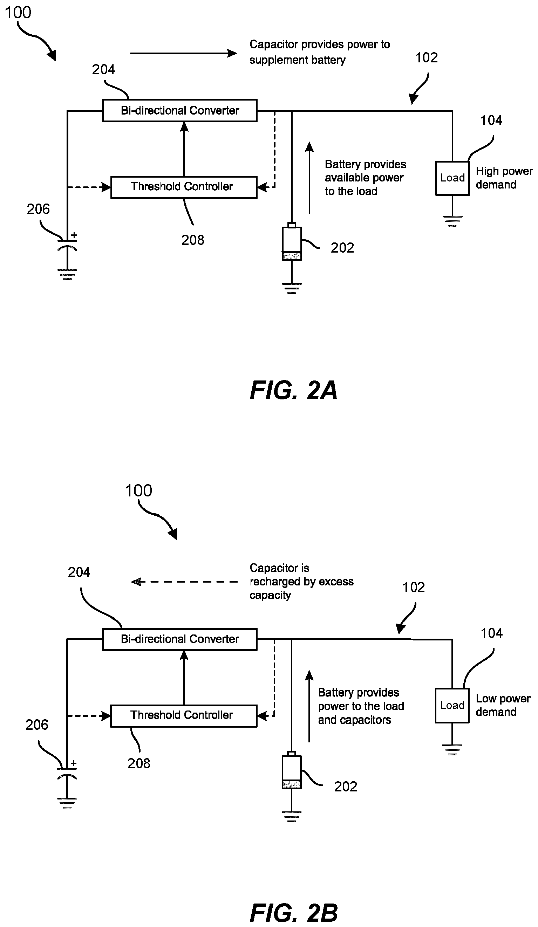

Example apparatus 100 may be implemented in a variety of ways. FIGS. 2A and 2B illustrate an example configuration of apparatus 100. As shown, apparatus 100 may include a primary energy-storing element consisting of a battery 202, a peak shaver consisting of a bi-directional converter 204 and/or a threshold controller 208, and a secondary energy-storing element consisting of a capacitor 206. In this example, bi-directional converter 204 may direct power between capacitor 206 and power rail 102 based on the power demands of load 104, the power-delivering capabilities of battery 202, and/or other factors as explained in greater detail below. Threshold controller 208 may represent or include circuitry and/or modules that control the thresholds by which bi-directional converter 204 directs power between a capacitor 206 and power rail 102.

FIG. 2A illustrates an example state of apparatus 100 in which (1) load 104 is consuming power from power rail 102 in excess of the ability of battery 202 to supply power and/or in excess of the ability of battery 202 to supply power at a certain voltage level and/or (2) battery 202 and bi-directional converter 204 are simultaneously providing power to load 104 via power rail 102. FIG. 2B illustrates another example state of apparatus 100 in which load 104 is consuming power from power rail 102 at a low enough level to allow bi-directional converter 204 to charge capacitor 206 by extracting power from battery 202 without exceeding the ability of battery 202 to supply power and/or without exceeding the ability of battery 202 to supply power at a certain voltage level.

In some examples, peak shaver 108 may supply power to a power rail (e.g., to supplement a primary energy-storing element) and/or extract power from a power rail (e.g., to charge a secondary energy-storing element) based on one or more predefined thresholds, one or more reactive thresholds, and/or any combination thereof. In some examples, peak shaver 108 may supply power to power rail 102 when a voltage of power rail 102 is at or below a discharging threshold value such that the voltage of power rail 102 does not drop significantly below the discharging threshold. Additionally or alternatively, peak shaver 108 may extract power from power rail 102 when the voltage of the power rail is at or above a charging threshold value such that the voltage of power rail 102 does not drop significantly below the charging threshold. In some examples, discharging and charging thresholds may be equal. In other examples, discharging and charging thresholds may be different.

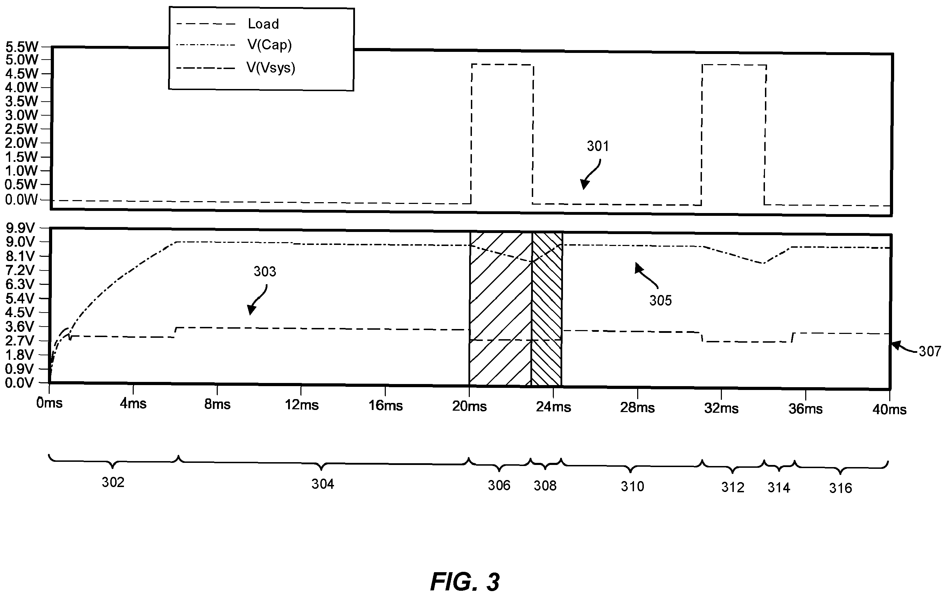

FIG. 3 illustrates an example temporal sequence of the power demands of load 104 (shown as line 301) along with corresponding voltages of power rail 102 and capacitor 206 (shown as lines 303 and 305, respectively). In this example, bi-directional converter 204 may be configured to provide as much power to power rail 102 as is necessary to maintain the voltage on power rail 102 above a threshold 307 (e.g., 3 volts) and/or may consume as much power to charge capacitor 206 as will not cause the voltage of power rail 102 to drop below threshold 307. In this example, threshold 307 may represent equal discharging and charging thresholds.

As shown in FIG. 3, the power consumed by load 104 may be relatively low or minimal during some time periods (e.g., time periods 302, 304, 308, 310, 314, and 316) and relatively high or maximal during other time periods (e.g., time periods 306 and 312). During time period 302, when the power consumed by load 104 is low, bi-directional converter 204 may draw power from battery 202 in order to charge capacitor 206 to 9 volts. As bi-directional converter 204 draws power from battery 202, a voltage drop across an internal resistance of battery 202 may cause the voltage on power rail 102 to drop from the open-circuit voltage of battery 202, and bi-directional converter 204 may limit the power drawn from battery 202 to maintain the voltage on power rail 102 above threshold 307. By the beginning of time period 304, capacitor 206 may be fully charged resulting in bi-directional converter 204 drawing no more power from battery 202 and the voltage on power rail 102 returning to the open-circuit voltage of battery 202.

Starting at the beginning of time period 306, load 104 may begin to draw power from power rail 102, and a voltage drop across the internal resistance of battery 202 may cause the voltage on power rail 102 to again drop from the open-circuit voltage of battery 202. In this example, bi-directional converter 204 may supply power from capacitor 206 to power rail 102 in order to maintain the voltage on power rail 102 above threshold 307, which may cause the voltage across capacitor 206 to decrease.

Starting at the beginning of time period 308, load 104 may stop drawing power from power rail 102, which could result in a reduced voltage drop across an internal resistance of battery 202. However, as capacitor 206 is no longer fully charged, bi-directional converter 204 may draw power from battery 202 in order to recharge capacitor 206 again to 9 volts. As bi-directional converter 204 draws power from battery 202, bi-directional converter 204 may limit the power drawn from battery 202 to maintain the voltage on power rail 102 above threshold 307. By the beginning of time period 310, capacitor 206 may be fully recharged resulting in bi-directional converter 204 drawing no more power from battery 202, and the voltage on power rail 102 returning to the open-circuit voltage of battery 202.

Starting at the beginning of time period 312, load 104 may again draw power from power rail 102, and a corresponding voltage drop across the internal resistance of battery 202 may again cause the voltage on power rail 102 to again drop from the open-circuit voltage of battery 202. In this example, bi-directional converter 204 may again supply power from capacitor 206 to power rail 102 in order to maintain the voltage on power rail 102 above threshold 307 causing the voltage across capacitor 206 to again decrease.

Starting at the beginning of time period 314, load 104 may again stop drawing power from power rail 102, which could result in a reduced voltage drop across an internal resistance of battery 202. However, as capacitor 206 is again no longer fully charged, bi-directional converter 204 may draw power from battery 202 in order to recharge capacitor 206 again to 9 volts. As bi-directional converter 204 draws power from battery 202, bi-directional converter 204 may limit the power drawn from battery 202 to maintain the voltage on power rail 102 above threshold 307. By the beginning of time period 316, capacitor 206 may be fully recharged resulting in bi-directional converter 204 drawing no more power from battery 202 and the voltage on power rail 102 returning to the open-circuit voltage of battery 202.

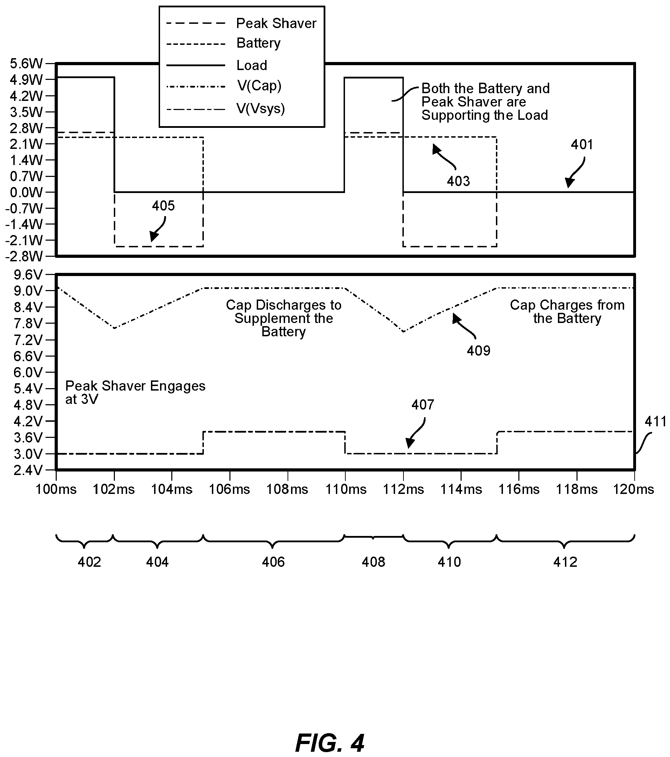

FIG. 4 illustrates another example temporal sequence of the power demands of load 104 (shown as line 401) along with corresponding power contributions of battery 202 and bi-directional converter 204 (shown as lines 403 and 405, respectively) and corresponding voltages of power rail 102 and capacitor 206 (shown as lines 407 and 409, respectively). In this example, bi-directional converter 204 may be configured to provide as much power to power rail 102 as is necessary to maintain the voltage on power rail 102 above threshold 411 (e.g., 3 volts) and/or may consume as much power to charge capacitor 206 as will not cause the voltage of power rail 102 to drop below threshold 411.

As shown, the power consumed by load 104 may be relatively low or minimal during some time periods (e.g., time periods 404, 406, 410, and 412) and relatively high or maximal during other time periods (e.g., time periods 402 and 408). During time period 402, when the power consumed by load 104 (in this example, 5 watts) is higher than the current power-delivering capabilities of battery 202 (in this example, 2.4 watts), bi-directional converter 204 may supply the difference (in this example, 2.6 watts) to power rail 102 such that the voltage on power rail 102 does not drop or sag below threshold 411 and load 104 is able to draw its requisite power from power rail 102 without experiencing a brownout event. In this example, bi-directional converter 204 may draw the supplemental power from capacitor 206. During time period 404, when the power consumed by load 104 is lower or non-existent, bi-directional converter 204 may draw power from battery 202 in order to charge capacitor 206. In this example, bi-directional converter 204 may draw power from battery 202 at the current power-delivering capabilities of battery 202 (in this example, 2.4 watts) in order to recharge capacitor 206. In doing so, bi-directional converter 204 may limit the power drawn from battery 202 to maintain the voltage on power rail 102 above threshold 411. By the beginning of time period 406, capacitor 206 may be fully charged resulting in bi-directional converter 204 drawing no more power from battery 202 and the voltage on power rail 102 returning to the open-circuit voltage of battery 202.

Starting at the beginning of time period 408, the power consumed by load 104 may return to being higher than the current power-delivering capabilities of battery 202, and bi-directional converter 204 may again supplement power to power rail 102 such that the voltage on power rail 102 does not drop below threshold 411 and load 104 is able to draw its requisite power from power rail 102 without experiencing a brownout event. During time period 410, when the power consumed by load 104 decreases or is non-existent, bi-directional converter 204 may return to drawing power from battery 202 in order to recharge capacitor 206. During time period 412, capacitor 206 may be fully recharged resulting in bi-directional converter 204 again drawing no power from battery 202, and the voltage on power rail 102 returning to the open-circuit voltage of battery 202.

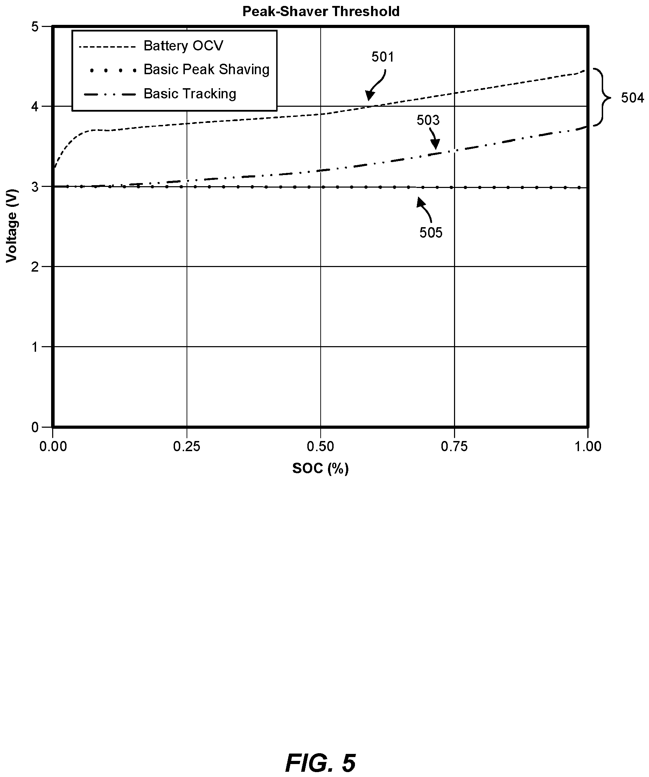

In some examples, the disclosed systems may use constant or fixed thresholds to regulate when or how a peak shaver should extract power from and/or supply power to a power rail. Additionally or alternatively, the disclosed systems may use variable or reactive thresholds to regulate when or how a peak shaver should extract power from and/or supply power to a power rail. FIG. 5 illustrates example peak-shaver voltage thresholds and their relationship to a battery's open-circuit voltage. As shown, line 501 may represent a battery's open-circuit voltage or maximum voltage in relationship to the battery's state charge, line 503 may represent a variable threshold that tracks with the battery's open-circuit voltage or maximum voltage according to a margin 504 (in this example, a delta or offset of approximately 0.7 volts), and line 505 may represent a constant threshold.

In some examples, the disclosed systems may use small, fixed peak-shaver voltage thresholds to limit the utilization of peak shavers and/or unnecessary charge or discharge cycles of secondary energy-storage elements. However, in some situations, use of small, fixed peak-shaver voltage thresholds may result in the voltages on power rails having large changes or deviations with sharp edges and/or high ripple. These sharp edges may result in higher frequency harmonics on the power rails, and the ripple may be greater at higher battery state of charge as a result of greater voltage changes or deviations. Unfortunately, these factors may result in piezoelectrically induced singing-capacitor effects (e.g., capacitors vibrating at or within audible frequency ranges), which may be especially problematic for devices worn or held near users' ears. In some examples, the disclosed systems may reduce or eliminate these effects by reducing or limiting the amount by which the voltages on power rails change, deviate, and/or slew using variable peak-shaver voltage thresholds. Using FIG. 5 as an example, when battery 202 is fully charged and its open-circuit voltage is 4.4 volts, the use of a 3-volt fixed threshold by bi-directional converter 204 may result in voltage changes or deviations on power rail 102 on the order of 1.4 volts. However, the use of a variable threshold such as that represented by line 503 in FIG. 5 by bi-directional converter 204 may result in voltage changes or deviations on power rail 102 that max out at 0.7 volts. In some examples, the disclosed peak shavers may choose to use the maximum of a variable threshold and a fixed threshold. In some examples, a suitable variable threshold may be achieved with a combination of linear and non-linear equations that limits slew rates on power rail 102.

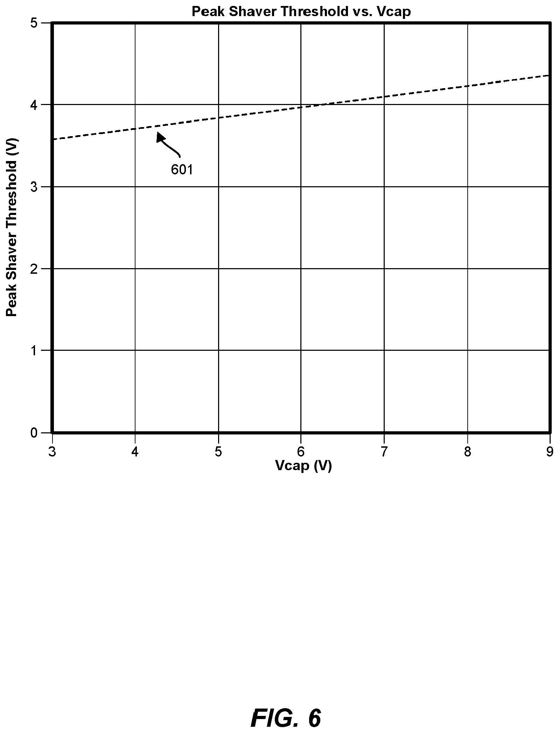

FIG. 6 illustrates another example peak-shaver voltage threshold and its relationship to a capacitor's voltage. As shown, line 601 may represent a variable peak-shaver voltage threshold that tracks with the voltage of a capacitor. In some examples, the variable peak-shaver voltage threshold represented by line 601 may be equal to M*Vcap + Vmin, where M is a capacitor multiplication factor, Vcap is a voltage of the capacitor, and Vmin is a minimum power-rail voltage that prevents system brownout. In at least one example, Vmin may vary as a function of a battery's open circuit voltage similar to the threshold represented by line 503 in FIG. 5. In some examples, variable peak-shaver voltage threshold represented by line 601 may represent a capacitor-multiplication threshold that causes bi-directional converter 204 and/or capacitor 206 to behave as a large physical capacitor attached to power rail 102.

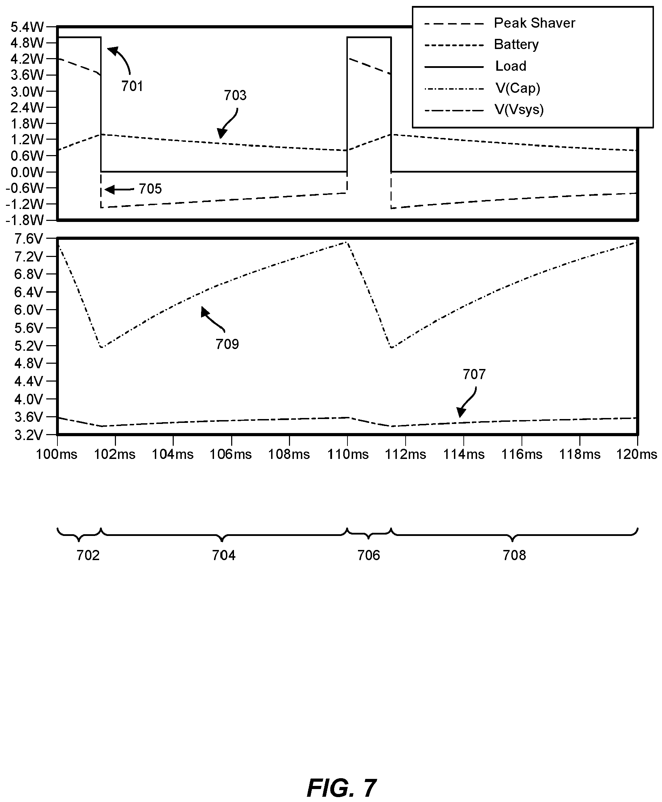

FIG. 7 illustrates an example implementation of the variable peak-shaver voltage threshold of FIG. 6. In this example, the power demands of load 104 may be represented by line 701, corresponding power contributions of battery 202 and bi-directional converter 204 may be respectively represented by lines 703 and 705, and corresponding voltages of power rail 102 and capacitor 206 may be respectively represented by lines 707 and 709. In this example, bi-directional converter 204 may be configured to provide as much power to power rail 102 as is necessary to maintain the voltage on power rail 102 above the variable peak-shaver voltage threshold shown in FIG. 6 and/or may consume as much power to charge capacitor 206 as will not cause the voltage of power rail 102 to drop below the variable peak-shaver voltage threshold shown in FIG. 6.

As shown in FIG. 7, the power consumed by load 104 may be relatively high or maximal during some time periods (e.g., time periods 702 and 706) and relatively low or minimal during other time periods (e.g., time periods 704 and 708). In this example, the power consumed by load 104 during time period 702 and time period 706 may be approximately 5 watts. At the beginning of time period 702, the voltage of capacitor 206 may be at its highest level, which may result in the variable peak-shaver voltage threshold being at its highest level. Since the variable peak-shaver voltage threshold is at its highest level, bi-directional converter 204 may regulate the voltage on power rail 102 by supplying the majority of the power demands of load 104. However, as the voltage of capacitor 206 and the variable peak-shaver voltage threshold decrease over time period 702, the amount of power supplied by bi-directional converter 204 may likewise decrease.

At the beginning of time period 704, when the power consumed by load 104 is lower or non-existent, bi-directional converter 204 may begin to draw power from battery 202 in order to charge capacitor 206. At the beginning of time period 704, the voltage of capacitor 206 may be at its lowest level, which may result in the variable peak-shaver voltage threshold being at its lowest level. As the voltage of capacitor 206 and the variable peak-shaver voltage threshold increase overtime period 702, the amount of power extracted by bi-directional converter 204 from battery 202 may likewise decrease. By using a variable peak-shaver voltage threshold, the bi-directional converter 204 may regulate the voltage on power rail 102 such that it gracefully slews along with voltage of capacitor 206, which may limit harmonic content across any additional ceramic capacitors electrically coupled to power rail 102.

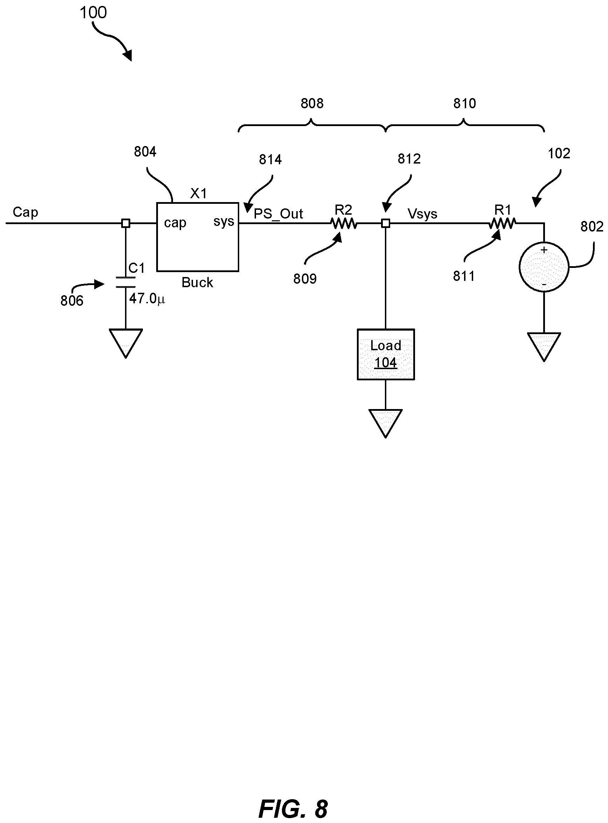

FIG. 8 illustrates an example partial circuit diagram of example apparatus 100. As shown, apparatus 100 may include a primary energy-storing element consisting of a battery 802, a peak shaver consisting of a bi-directional buck converter 804, and a secondary energy-storing element consisting of an array of one or more capacitors (e.g., a capacitor 806). In this example, bi-directional buck converter 804 may direct power between capacitor 806 and power rail 102 based on the power demands of load 104, the power-delivering capabilities of battery 802, and/or the direct-current resistances of power rail 102.

As illustrated in FIG. 8, power rail 102 may include multiple segments (e.g., a segment 808 between bi-directional buck converter 804 and load 104 and a segment 810 between battery 802 and load 104. In some examples, one or more segments of power rail 102 may exhibit significant direct-current resistances. For example, segment 808 may exhibit a significant direct-current resistance represented by a resistance 809. In some examples, resistance 809 may cause a voltage drop that is proportional to a current flow through segment 808. As a result, an output voltage of bi-directional buck converter 804 (e.g., a voltage at point 814 of power rail 102) may be significantly higher or lower than the voltage at a point 812 of power rail 102. Similarly, segment 810 may exhibit a significant direct-current resistance represented by a resistance 811. In some examples, resistance 811 may cause a voltage drop that is proportional to a current flow through segment 810. As a result, an output voltage of battery 802 may be significantly higher or lower than the voltage at point 812 or point 814 of power rail 102. As explained below, in some examples, the disclosed systems may take direct-current resistances into account when setting peak-shaver voltage thresholds.

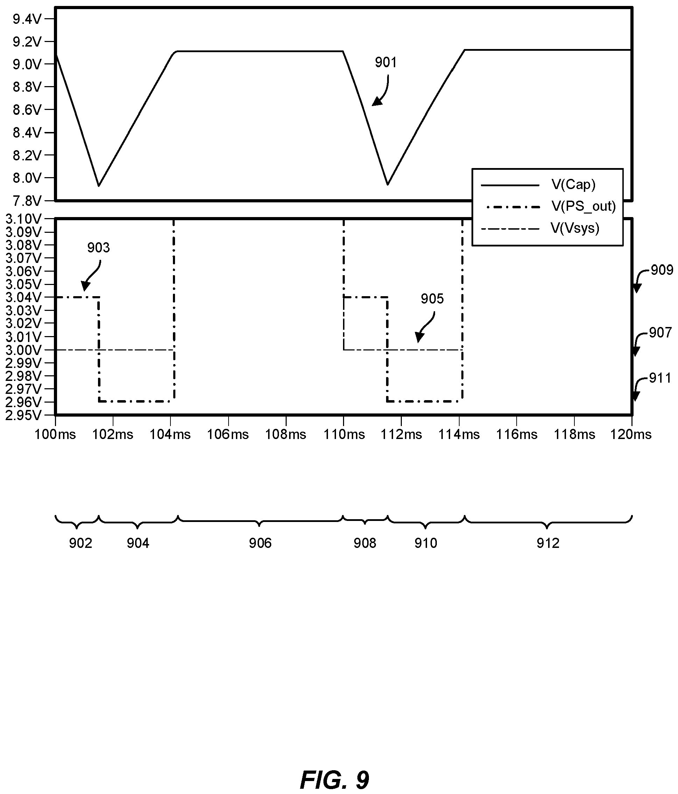

FIG. 9 illustrates an example sequence of capacitor voltages (shown as line 901), peak-shaver output voltages (shown as line 903), and power-rail voltages (shown as line 905). In this example, line 901 may represent voltages across capacitor 806 in FIG. 8, line 903 may represent voltages at point 814 of power rail 102 in FIG. 8, and line 905 may represent voltages at point 812 of power rail 102 in FIG. 8. In this example, the power consumed by load 104 may be relatively high or maximal during some time periods (e.g., time periods 902 and 908) and relatively low or minimal during other time periods (e.g., time periods 904, 906, 910, and 912).

During time period 902, when the power consumed by load 104 is high, bi-directional buck converter 804 may supply power to power rail 102 such that the voltage on power rail 102 at point 812 does not drop or sag below threshold 907 (in this example, approximately 3 volts) and load 104 is able to draw its requisite power from power rail 102 without experiencing a brownout event. In this example, bi-directional buck converter 804 may draw the supplemental power from capacitor 806 but, because of a voltage drop across resistance 809, bi-directional buck converter 804 may account for the voltage drop by regulating the voltage of power rail 102 at point 814 at a higher threshold 909.

During time period 904, when the power consumed by load 104 is lower or non-existent, bi-directional buck converter 804 may extract power from power rail 102 in order to charge capacitor 806. In this example, bi-directional buck converter 804 may supply the extracted power from capacitor 806 but, because of a voltage drop across resistance 809, bi-directional buck converter 804 may account for the voltage drop by regulating the voltage of power rail 102 at point 814 at a lower threshold 911.

In some examples, the disclosed systems may monitor or track the power demands of load 104 in order to determine when and/or how to dynamically adjust peak-shaver voltage thresholds in order to maintain the voltage at point 812 at or above an intended voltage level. For example, by monitoring the power demands of load 104, bi-directional buck converter 804 may determine that regulation of the voltage at point 814 at or above threshold 909 during periods of peak power demands will result in the voltage at point 812 remaining above 3 volts and/or that regulation of the voltage at point 814 at or above threshold 911 during periods of off-peak power demands will result in the voltage at point 812 remaining above 3 volts. In at least one example, bi-directional buck converter 804 may extract maximum power from battery 802 to recharge capacitor 806 while maintaining a minimum desired operating voltage of load 104 at point 812.

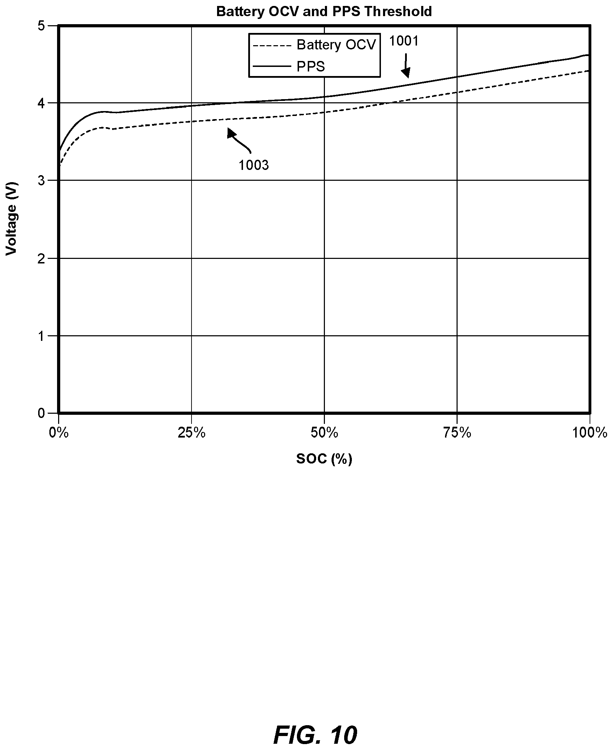

In some examples, the disclosed peak shavers may perform power-supply and/or battery-charging functions in addition to the peak-shaving functions described herein. For example, when apparatus 100 includes a charger (e.g., a linear charger), peak shaver 108 may act as a programmable power supply by tracking a voltage of the charger above a battery's open-circuit voltage sufficient enough to maintain a minimal margin for the charger's dropout (e.g., a minimum voltage required across the charger to maintain regulation) to reduce an amount of time the charger is operational. In systems without a charger, peak shaver 108 may act as a programmable power supply by behaving as a constant-current (CC) or constant-voltage (CV) source to directly charge the battery. FIG. 10 illustrates example battery and programable-power-supply voltages in accordance with an embodiment of the present disclosure. In this example, line 1001 may represent output voltages of peak shaver 108 when acting as a programmable power supply, and line 1003 may represent corresponding open-circuit voltages of a battery.

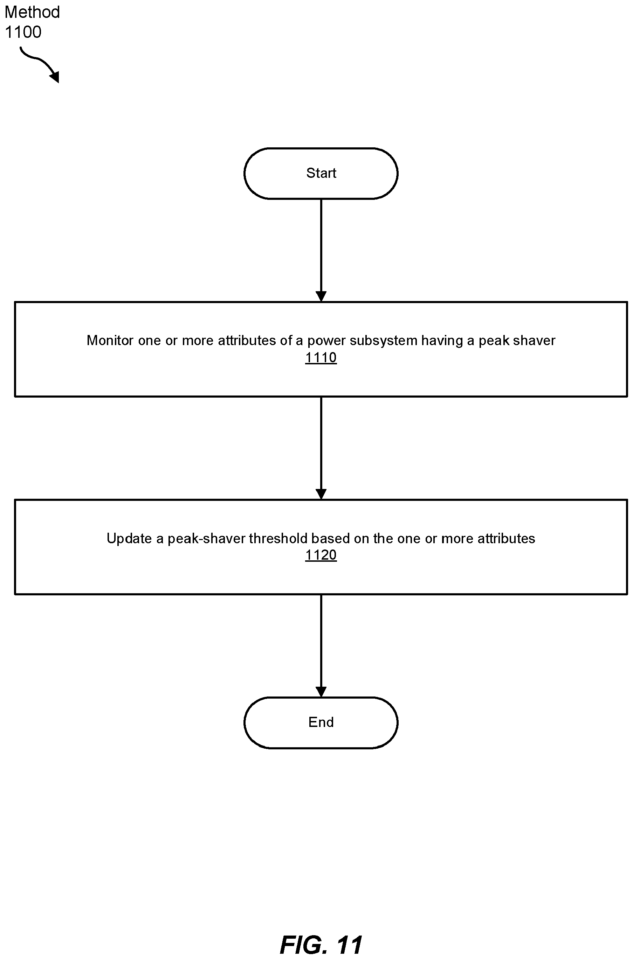

FIG. 11 is a flow diagram of an exemplary computer-implemented method 1100 for handling peak-power demands that exceed the power-delivering capabilities of primary energy-storage devices. The steps shown in FIG. 11 may be performed by any suitable computer-executable code and/or computing system, including the system(s) illustrated in FIGS. 1, 2, 8, 12, and 13-22. In one example, each of the steps shown in FIG. 11 may represent an algorithm whose structure includes and/or is represented by multiple sub-steps, examples of which will be provided in greater detail below.

As illustrated in FIG. 11, at step 1110 one or more of the systems described herein may monitor at least one attribute of a power subsystem. For example, peak shaver 108 may monitor one or more attributes of power rail 102, load 104, primary energy-storing element 106, peak shaver 108, and/or secondary energy-storing element 110. The systems described herein may perform step 1110 in a variety of ways. For example, peak shaver 108 may monitor attributes of a battery by tracking an open-circuit voltage, a terminal voltage, a no-load voltage, a low-load voltage, a power-delivering capacity, an internal resistance, and/or a state-of-charge of the battery. In some examples, peak shaver 108 may monitor a load by tracking on-peak power demands, off-peak power demands, and/or patterns of power demands. In some examples, peak shaver 108 may monitor a power rail by tracking a voltage or resistance of the power rail at one or more points along the power rail.

As illustrated in FIG. 11, at step 1120 one or more of the systems described herein may update a peak-shaver voltage threshold based on the attributes monitored at step 1110. For example, peak shaver 108 may update a peak-shaver voltage threshold based on attributes of power rail 102, load 104, primary energy-storing element 106, peak shaver 108, and/or secondary energy-storing element 110. The systems described herein may perform step 1120 in a variety of ways. For example, peak shaver 108 may update a peak-shaver voltage threshold based on a battery's open-circuit voltages (e.g., as described in connection with FIG. 5), based on a capacitor's voltages (e.g., as described in connection with FIGS. 6 and 7), and/or a power rail's direct-current resistances or a load's power demands (e.g., as described in connection with FIGS. 8 and 9).

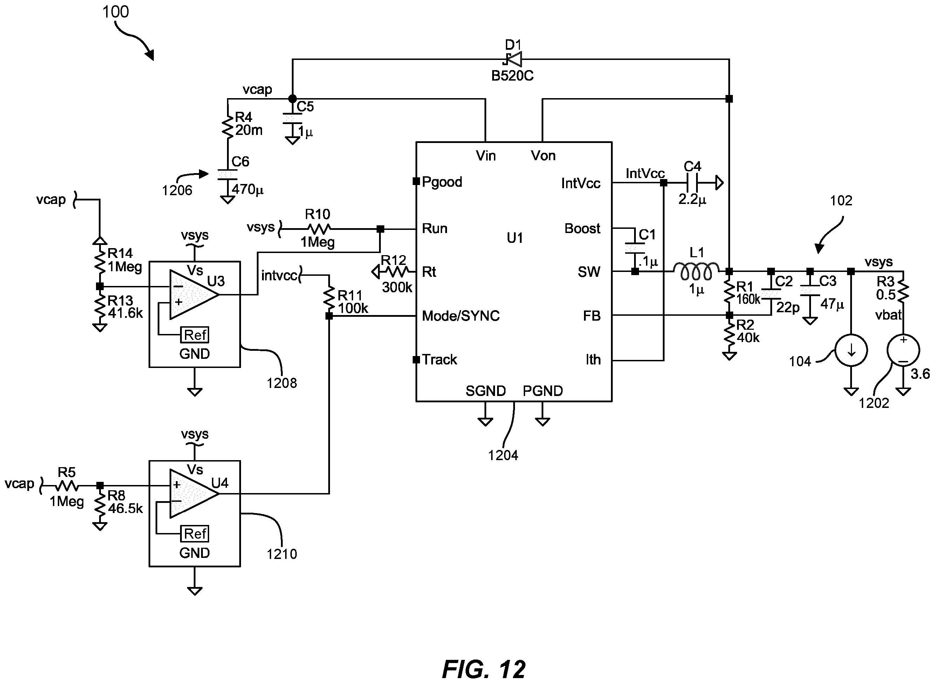

FIG. 12 illustrates an example partial circuit diagram of example apparatus 100. As shown, apparatus 100 may include a primary energy-storing element consisting of a battery 1202, a peak shaver consisting of a synchronous step-down regulator 1204, a voltage comparator 1208, and/or a voltage comparator 1210, and a secondary energy-storing element consisting of a capacitor 1206. In this example, synchronous step-down regulator 1204 may direct power between capacitor 1206 and power rail 102 based on the power demands of load 104, the power-delivering capabilities of battery 1202, and/or other factors as explained herein. In this example, voltage comparator 1208 may be configured to provide secondary over-voltage protection, and/or voltage comparator 1210 may be configured to provide voltage regulation.

In this example, synchronous step-down regulator 1204 may include a Vin pin representing a power supply input pin for connecting to a power supply (e.g., capacitor 1206). Synchronous step-down regulator 1204 may also include a Von pin representing an on-time voltage input pin for connecting to a regulated output of synchronous step-down regulator 1204 (e.g., power rail 102). Synchronous step-down regulator 1204 may also include a IntVcc pin representing an internal voltage (e.g., 3.3 volts) regulator output pin. Synchronous step-down regulator 1204 may also include a Boost pin representing a boosted floating driver supply pin for connecting to an external bootstrap capacitor. Synchronous step-down regulator 1204 may also include a SW pin representing a switch node output pin for connecting to the switch side of an external inductor. Synchronous step-down regulator 1204 may also include a FB pin representing an output voltage feedback pin for connecting to an external resistor divider network whose voltage will be compared to an internal voltage (e.g., 0.6 volts) reference voltage.

Synchronous step-down regulator 1204 may also include an Ith pin representing an error amplifier output and switching regulator compensation pin for connecting to the IntVcc pin in order to compensate a regulator loop frequency response. Synchronous step-down regulator 1204 may also include a Run pin representing a regulator enable pin that may enable synchronous step-down regulator 1204 when an applied voltage is above a particular threshold (e.g., 1.25 volts) or disable synchronous step-down regulator 1204 when an applied voltage is below a particular threshold (e.g., 1 volt). Synchronous step-down regulator 1204 may also include an Rt pin representing an oscillator frequency program pin for connecting to an external resistor for the purpose of programing a switching frequency of synchronous step-down regulator 1204. Synchronous step-down regulator 1204 may also include a Mode/SYNC pin representing a mode selection and external synchronization input pin for placing synchronous step-down regulator 1204 in continuous operation when tied to ground. Synchronous step-down regulator 1204 may also include a SGND pin representing a signal ground pin, and/or a PGND pin representing a power ground pin.

### Example Embodiments

Example 1: An extended-reality system may include (1) a power rail, (2) a load electrically coupled to the power rail, (3) a primary energy-storing element operable to provide power to the load via the power rail, (4) a bi-directional converter electrically coupled to the power rail, and (5) a secondary energy-storing element electrically coupled to the bi-directional converter and operable to (A) discharge by supplying power to the power rail through the bi-directional converter when a voltage of the power rail is at or below a discharging threshold value and (B) charge by extracting power from the power rail through the bi-directional converter when the voltage of the power rail is at or above a charging threshold value.

Example 2: The extended-reality system of Example 1 where the discharging threshold value or the charging threshold value is a predetermined fixed threshold value.

Example 3: The extended-reality system of any of Examples 1-2 where (1) the primary energy-storing element includes a battery having an internal resistance, (2) the secondary energy-storing element includes one or more capacitors, (3) and the discharging threshold value is variable and based at least in part on a voltage of the battery that excludes a voltage drop resulting from the internal resistance.

Example 4: The extended-reality system of any of Examples 1-3 further including a threshold controller operable to set the discharging threshold value based at least in part on the greater of a difference between the voltage of the battery and a predetermined delta or a predetermined minimum threshold value.

Example 5: The extended-reality system of any of Examples 1-4 where (1) the secondary energy-storing element includes one or more capacitors and (2) the extended-reality system further includes a threshold controller operable to (A) monitor a voltage of the one or more capacitors and (B) set the discharging threshold value based at least in part on a sum of a predetermined minimum voltage and a product of a predetermined factor and the voltage of the one or more capacitors.

Example 6: The extended-reality system of any of Examples 1-5 where (1) the power rail includes a segment between the bi-directional converter and the load, (2) the segment has a direct-current resistance, (3) the voltage of the power rail is a voltage at an end of the segment closest to the bi-directional converter, and (4) the extended-reality system further includes a threshold controller operable to (A) monitor a current in the segment, (B) monitor the voltage at the end of the segment closest to the bi-directional converter, and (C) set the discharging threshold value based at least in part on a sum of a predetermined voltage and a product of the current in the segment and the direct-current resistance.

Example 7: The extended-reality system of any of Examples 1-6 where (1) the power rail includes a segment between the bi-directional converter and the load, (2) the segment has a direct-current resistance, (3) the voltage of the power rail is a voltage at an end of the segment closest to the bi-directional converter, and (4) the extended-reality system further includes a threshold controller operable to (A) monitor a current in the segment, (2) monitor the voltage at the end of the segment closest to the bi-directional converter, and (3) set the charging threshold value based at least in part on a difference between a predetermined voltage and a product of the current in the segment and the direct-current resistance.

Example 8: The extended-reality system of any of Examples 1-7 where (1) the primary energy-storing element includes a battery, (2) the extended-reality system further includes a linear charger operable to charge the battery, (3) the linear charger has a dropout voltage, and (4) the bi-directional converter supplies an input voltage to the linear charger substantially equal to a sum of the dropout voltage of the linear charger and a voltage of the battery.

Example 9: The extended-reality system of any of Examples 1-8 where (1) the primary energy-storing element includes a battery and (2) the bi-directional converter is operable to supply a constant current or a constant voltage to charge the battery.

Example 10: The extended-reality system of any of Examples 1-9 further including (1) an eyewear front frame and (2) an eyewear temple coupled to the eyewear front frame where (A) the load includes a display element integrated into the eyewear front frame, (B) the primary energy-storing element includes a battery integrated into a distal portion of the eyewear temple, and (C) the power rail extends from the battery through the eyewear temple to the display element.

Example 11: The extended-reality system of any of Examples 1-10 further including (1) an eyewear front frame and (2) an eyewear temple coupled to the eyewear front frame where (A) the load includes a display element integrated into the eyewear front frame, (B) the bi-directional converter is integrated into a distal portion of the eyewear temple, and (C) the power rail extends from the bi-directional converter through the eyewear temple to the display element.

Example 12: The extended-reality system of any of Examples 1-11 further including an eyewear front frame where (1) the load includes a display element integrated into a left portion of the eyewear front frame, (2) the secondary energy-storing element includes a bank of capacitors integrated into a right portion of the eyewear front frame, and (3) the power rail extends from the display element across a bridge portion of the eyewear front frame to the bank of capacitors.

Example 13: The extended-reality system of any of Examples 1-12 further including an audio subsystem where (1) the secondary energy-storing element includes one or more capacitors and (2) the one or more capacitors form a portion of the audio subsystem.

Example 14: A computer-implemented method may include (1) monitoring at least one attribute of a power subsystem of an extended-reality system (e.g., the extended-reality system of any of Examples 1-13) and (2) setting at least one of a discharging threshold value or a charging threshold value based at least in part on the at least one attribute of the power subsystem.

Example 15: The computer-implemented method of Examples 14 where (1) the primary energy-storing element includes a battery having an internal resistance, (2) the at least one attribute of the power subsystem includes a voltage of the battery that excludes a voltage drop resulting from the internal resistance, and (3) setting at least one of the discharging threshold value or the charging threshold value includes setting the discharging threshold value equal to a difference between the voltage of the battery and a predetermined delta.

Example 16: The computer-implemented method of any of Examples 14-15 where (1) the secondary energy-storing element includes one or more capacitors, (2) monitoring the at least one attribute of the power subsystem of the extended-reality system includes monitoring a voltage of the one or more capacitors, and (3) setting at least one of the discharging threshold value or the charging threshold value includes setting the discharging threshold value based at least in part on a sum of a predetermined minimum voltage and a product of a predetermined factor and the voltage of the one or more capacitors.

Example 17: The computer-implemented method of any of Examples 14-16 where (1) the power rail includes a segment between the bi-directional converter and the load, (2) the segment has a direct-current resistance, (3) the voltage of the power rail is a voltage at an end of the segment closest to the bi-directional converter, and (4) monitoring the at least one attribute of the power subsystem of the extended-reality system includes (A) monitoring a current in the segment and (B) monitoring the voltage at the end of the segment closest to the bi-directional converter, and (5) setting at least one of the discharging threshold value or the charging threshold value includes setting the discharging threshold value based at least in part on a sum of a predetermined voltage and a product of the current in the segment and the direct-current resistance.

Example 18: The computer-implemented method of any of Examples 14-17 where (1) the power rail includes a segment between the bi-directional converter and the load, (2) the segment has a direct-current resistance, (3) the voltage of the power rail is a voltage at an end of the segment closest to the bi-directional converter, (4) monitoring the at least one attribute of the power subsystem of the extended-reality system includes (A) monitoring a current in the segment and (B) monitoring the voltage at the end of the segment closest to the bi-directional converter, and (5) setting at least one of the discharging threshold value or the charging threshold value includes setting the charging threshold value based at least in part on a difference between a predetermined voltage and a product of the current in the segment and the direct-current resistance.

Example 19: An apparatus may include (1) a bi-directional converter, (2) a power-rail connector electrically coupled to the bi-directional converter and configured to (A) supply power from the bi-directional converter to a power rail and (B) supply power to the bi-directional converter from the power rail, (3) a power-storage connector electrically coupled to the bi-directional converter and configured to (C) supply power from the bi-directional converter to an energy-storing element and (D) supply power to the bi-directional converter from the energy-storing element, and (4) a threshold controller operable to (E) direct power from the power-storage connector to the power-rail connector through the bi-directional converter when a voltage of the power rail is at or below a discharging threshold value and (F) direct power from the power-rail connector to the power-storage connector through the bi-directional converter when the voltage of the power rail is at or above a charging threshold value.

Example 20: The apparatus of Example 19 where the threshold controller is further operable to update the discharging threshold value or the charging threshold value.

Embodiments of the present disclosure may include or be implemented in - conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

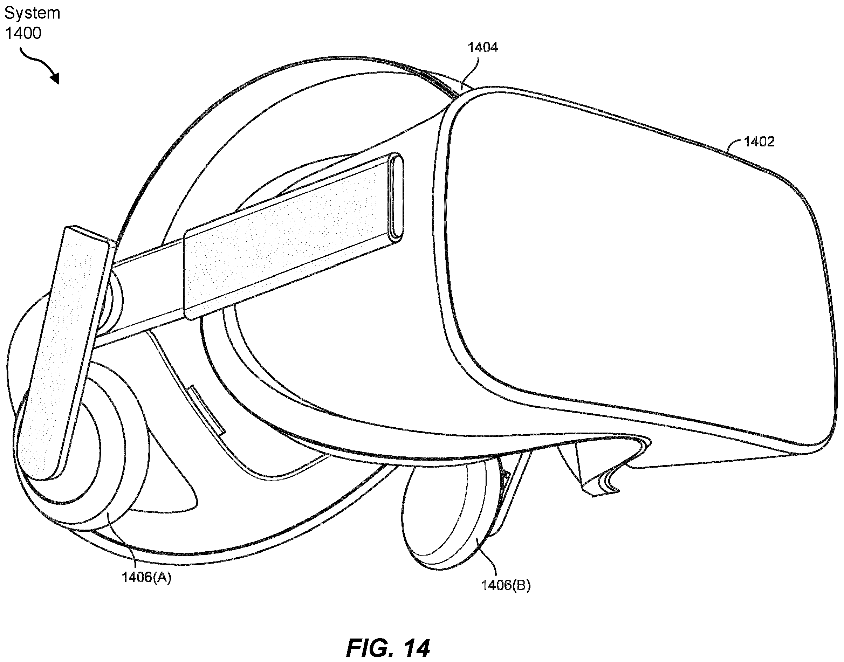

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 1300 in FIG. 13) or that visually immerses a user in an artificial reality (such as, e.g., virtual-reality system 1400 in FIG. 14). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 13, augmented-reality system 1300 may include an eyewear device 1302 with a frame 1310 configured to hold a left display device 1315(A) and a right display device 1315(B) in front of a user's eyes. Display devices 1315(A) and 1315(B) may act together or independently to present an image or series of images to a user. While augmented-reality system 1300 includes two displays, embodiments of this disclosure may be implemented in augmented-reality systems with a single NED or more than two NEDs.

In some embodiments, augmented-reality system 1300 may include one or more sensors, such as sensor 1340. Sensor 1340 may generate measurement signals in response to motion of augmented-reality system 1300 and may be located on substantially any portion of frame 1310. Sensor 1340 may represent one or more of a variety of different sensing mechanisms, such as a position sensor, an inertial measurement unit (IMU), a depth camera assembly, a structured light emitter and/or detector, or any combination thereof. In some embodiments, augmented-reality system 1300 may or may not include sensor 1340 or may include more than one sensor. In embodiments in which sensor 1340 includes an IMU, the IMU may generate calibration data based on measurement signals from sensor 1340. Examples of sensor 1340 may include, without limitation, accelerometers, gyroscopes, magnetometers, other suitable types of sensors that detect motion, sensors used for error correction of the IMU, or some combination thereof.

In some examples, augmented-reality system 1300 may also include a microphone array with a plurality of acoustic transducers 1320(A)-1320(J), referred to collectively as acoustic transducers 1320. Acoustic transducers 1320 may represent transducers that detect air pressure variations induced by sound waves. Each acoustic transducer 1320 may be configured to detect sound and convert the detected sound into an electronic format (e.g., an analog or digital format). The microphone array in FIG. 13 may include, for example, ten acoustic transducers: 1320(A) and 1320(B), which may be designed to be placed inside a corresponding ear of the user, acoustic transducers 1320(C), 1320(D), 1320(E), 1320(F), 1320(G), and 1320(H), which may be positioned at various locations on frame 1310, and/or acoustic transducers 1320(1) and 1320(J), which may be positioned on a corresponding neckband 1305.

In some embodiments, one or more of acoustic transducers 1320(A)-(J) may be used as output transducers (e.g., speakers). For example, acoustic transducers 1320(A) and/or 1320(B) may be earbuds or any other suitable type of headphone or speaker.

The configuration of acoustic transducers 1320 of the microphone array may vary. While augmented-reality system 1300 is shown in FIG. 13 as having ten acoustic transducers 1320, the number of acoustic transducers 1320 may be greater or less than ten. In some embodiments, using higher numbers of acoustic transducers 1320 may increase the amount of audio information collected and/or the sensitivity and accuracy of the audio information. In contrast, using a lower number of acoustic transducers 1320 may decrease the computing power required by an associated controller 1350 to process the collected audio information. In addition, the position of each acoustic transducer 1320 of the microphone array may vary. For example, the position of an acoustic transducer 1320 may include a defined position on the user, a defined coordinate on frame 1310, an orientation associated with each acoustic transducer 1320, or some combination thereof.

Acoustic transducers 1320(A) and 1320(B) may be positioned on different parts of the user's ear, such as behind the pinna, behind the tragus, and/or within the auricle or fossa. Or, there may be additional acoustic transducers 1320 on or surrounding the ear in addition to acoustic transducers 1320 inside the ear canal. Having an acoustic transducer 1320 positioned next to an ear canal of a user may enable the microphone array to collect information on how sounds arrive at the ear canal. By positioning at least two of acoustic transducers 1320 on either side of a user's head (e.g., as binaural microphones), augmented-reality device 1300 may simulate binaural hearing and capture a 3D stereo sound field around about a user's head. In some embodiments, acoustic transducers 1320(A) and 1320(B) may be connected to augmented-reality system 1300 via a wired connection 1330, and in other embodiments acoustic transducers 1320(A) and 1320(B) may be connected to augmented-reality system 1300 via a wireless connection (e.g., a BLUETOOTH connection). In still other embodiments, acoustic transducers 1320(A) and 1320(B) may not be used at all in conjunction with augmented-reality system 1300.

Acoustic transducers 1320 on frame 1310 may be positioned in a variety of different ways, including along the length of the temples, across the bridge, above or below display devices 1315(A) and 1315(B), or some combination thereof. Acoustic transducers 1320 may also be oriented such that the microphone array is able to detect sounds in a wide range of directions surrounding the user wearing the augmented-reality system 1300. In some embodiments, an optimization process may be performed during manufacturing of augmented-reality system 1300 to determine relative positioning of each acoustic transducer 1320 in the microphone array.

In some examples, augmented-reality system 1300 may include or be connected to an external device (e.g., a paired device), such as neckband 1305. Neckband 1305 generally represents any type or form of paired device. Thus, the following discussion of neckband 1305 may also apply to various other paired devices, such as charging cases, smart watches, smart phones, wrist bands, other wearable devices, hand-held controllers, tablet computers, laptop computers, other external compute devices, etc.

As shown, neckband 1305 may be coupled to eyewear device 1302 via one or more connectors. The connectors may be wired or wireless and may include electrical and/or non-electrical (e.g., structural) components. In some cases, eyewear device 1302 and neckband 1305 may operate independently without any wired or wireless connection between them. While FIG. 13 illustrates the components of eyewear device 1302 and neckband 1305 in example locations on eyewear device 1302 and neckband 1305, the components may be located elsewhere and/or distributed differently on eyewear device 1302 and/or neckband 1305. In some embodiments, the components of eyewear device 1302 and neckband 1305 may be located on one or more additional peripheral devices paired with eyewear device 1302, neckband 1305, or some combination thereof.

Pairing external devices, such as neckband 1305, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 1300 may be provided by a paired device or shared between a paired device and an eyewear device, thus reducing the weight, heat profile, and form factor of the eyewear device overall while still retaining desired functionality. For example, neckband 1305 may allow components that would otherwise be included on an eyewear device to be included in neckband 1305 since users may tolerate a heavier weight load on their shoulders than they would tolerate on their heads. Neckband 1305 may also have a larger surface area over which to diffuse and disperse heat to the ambient environment. Thus, neckband 1305 may allow for greater battery and computation capacity than might otherwise have been possible on a stand-alone eyewear device. Since weight carried in neckband 1305 may be less invasive to a user than weight carried in eyewear device 1302, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 1305 may be communicatively coupled with eyewear device 1302 and/or to other devices. These other devices may provide certain functions (e.g., tracking, localizing, depth mapping, processing, storage, etc.) to augmented-reality system 1300. In the embodiment of FIG. 13, neckband 1305 may include two acoustic transducers (e.g., 1320(I) and 1320(J)) that are part of the microphone array (or potentially form their own microphone subarray). Neckband 1305 may also include a controller 1325 and a power source 1335.

Acoustic transducers 1320(I) and 1320(J) of neckband 1305 may be configured to detect sound and convert the detected sound into an electronic format (analog or digital). In the embodiment of FIG. 13, acoustic transducers 1320(I) and 1320(J) may be positioned on neckband 1305, thereby increasing the distance between the neckband acoustic transducers 1320(I) and 1320(J) and other acoustic transducers 1320 positioned on eyewear device 1302. In some cases, increasing the distance between acoustic transducers 1320 of the microphone array may improve the accuracy of beamforming performed via the microphone array. For example, if a sound is detected by acoustic transducers 1320(C) and 1320(D) and the distance between acoustic transducers 1320(C) and 1320(D) is greater than, e.g., the distance between acoustic transducers 1320(D) and 1320(E), the determined source location of the detected sound may be more accurate than if the sound had been detected by acoustic transducers 1320(D) and 1320(E).

Controller 1325 of neckband 1305 may process information generated by the sensors on neckband 1305 and/or augmented-reality system 1300. For example, controller 1325 may process information from the microphone array that describes sounds detected by the microphone array. For each detected sound, controller 1325 may perform a direction-of-arrival (DOA) estimation to estimate a direction from which the detected sound arrived at the microphone array. As the microphone array detects sounds, controller 1325 may populate an audio data set with the information. In embodiments in which augmented-reality system 1300 includes an inertial measurement unit, controller 1325 may compute all inertial and spatial calculations from the IMU located on eyewear device 1302. A connector may convey information between augmented-reality system 1300 and neckband 1305 and between augmented-reality system 1300 and controller 1325. The information may be in the form of optical data, electrical data, wireless data, or any other transmittable data form. Moving the processing of information generated by augmented-reality system 1300 to neckband 1305 may reduce weight and heat in eyewear device 1302, making it more comfortable to the user.

Power source 1335 in neckband 1305 may provide power to eyewear device 1302 and/or to neckband 1305. Power source 1335 may include, without limitation, lithium ion batteries, lithium-polymer batteries, primary lithium batteries, alkaline batteries, or any other form of power storage. In some cases, power source 1335 may be a wired power source. Including power source 1335 on neckband 1305 instead of on eyewear device 1302 may help better distribute the weight and heat generated by power source 1335.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 1400 in FIG. 14, that mostly or completely covers a user's field of view. Virtual-reality system 1400 may include a front rigid body 1402 and a band 1404 shaped to fit around a user's head. Virtual-reality system 1400 may also include output audio transducers 1406(A) and 1406(B). Furthermore, while not shown in FIG. 14, front rigid body 1402 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 1300 and/or virtual-reality system 1400 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 1300 and/or virtual-reality system 1400 may include microLED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 1300 and/or virtual-reality system 1400 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

As noted, artificial-reality systems 1300 and 1400 may be used with a variety of other types of devices to provide a more compelling artificial-reality experience. These devices may be haptic interfaces with transducers that provide haptic feedback and/or that collect haptic information about a user's interaction with an environment. The artificial-reality systems disclosed herein may include various types of haptic interfaces that detect or convey various types of haptic information, including tactile feedback (e.g., feedback that a user detects via nerves in the skin, which may also be referred to as cutaneous feedback) and/or kinesthetic feedback (e.g., feedback that a user detects via receptors located in muscles, joints, and/or tendons).

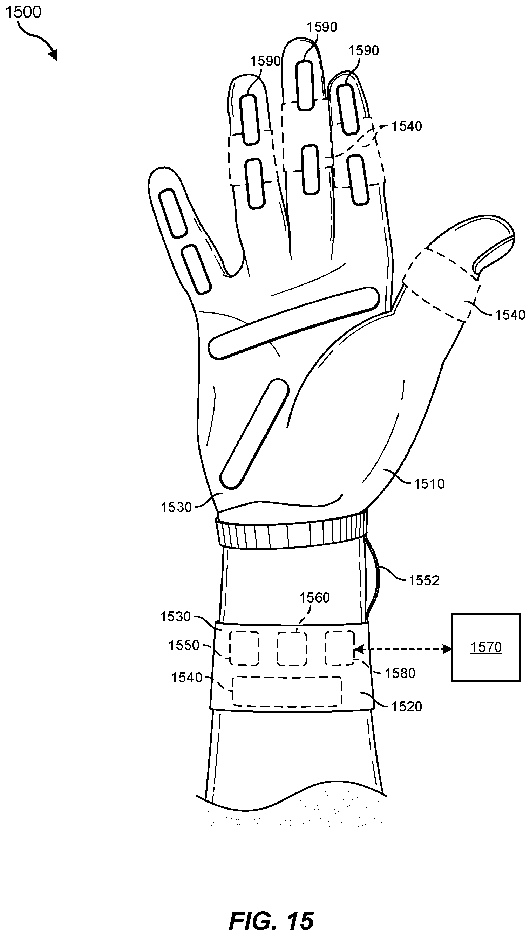

Haptic feedback may be provided by interfaces positioned within a user's environment (e.g., chairs, tables, floors, etc.) and/or interfaces on articles that may be worn or carried by a user (e.g., gloves, wristbands, etc.). As an example, FIG. 15 illustrates a vibrotactile system 1500 in the form of a wearable glove (haptic device 1510) and wristband (haptic device 1520). Haptic device 1510 and haptic device 1520 are shown as examples of wearable devices that include a flexible, wearable textile material 1530 that is shaped and configured for positioning against a user's hand and wrist, respectively. This disclosure also includes vibrotactile systems that may be shaped and configured for positioning against other human body parts, such as a finger, an arm, a head, a torso, a foot, or a leg. By way of example and not limitation, vibrotactile systems according to various embodiments of the present disclosure may also be in the form of a glove, a headband, an armband, a sleeve, a head covering, a sock, a shirt, or pants, among other possibilities. In some examples, the term "textile" may include any flexible, wearable material, including woven fabric, non-woven fabric, leather, cloth, a flexible polymer material, composite materials, etc.

One or more vibrotactile devices 1540 may be positioned at least partially within one or more corresponding pockets formed in textile material 1530 of vibrotactile system 1500. Vibrotactile devices 1540 may be positioned in locations to provide a vibrating sensation (e.g., haptic feedback) to a user of vibrotactile system 1500. For example, vibrotactile devices 1540 may be positioned against the user's finger(s), thumb, or wrist, as shown in FIG. 15. Vibrotactile devices 1540 may, in some examples, be sufficiently flexible to conform to or bend with the user's corresponding body part(s).

A power source 1550 (e.g., a battery) for applying a voltage to the vibrotactile devices 1540 for activation thereof may be electrically coupled to vibrotactile devices 1540, such as via conductive wiring 1552. In some examples, each of vibrotactile devices 1540 may be independently electrically coupled to power source 1550 for individual activation. In some embodiments, a processor 1560 may be operatively coupled to power source 1550 and configured (e.g., programmed) to control activation of vibrotactile devices 1540.

Vibrotactile system 1500 may be implemented in a variety of ways. In some examples, vibrotactile system 1500 may be a standalone system with integral subsystems and components for operation independent of other devices and systems. As another example, vibrotactile system 1500 may be configured for interaction with another device or system 1570. For example, vibrotactile system 1500 may, in some examples, include a communications interface 1580 for receiving and/or sending signals to the other device or system 1570. The other device or system 1570 may be a mobile device, a gaming console, an artificial-reality (e.g., virtual-reality, augmented-reality, mixed-reality) device, a personal computer, a tablet computer, a network device (e.g., a modem, a router, etc.), a handheld controller, etc. Communications interface 1580 may enable communications between vibrotactile system 1500 and the other device or system 1570 via a wireless (e.g., Wi-Fi, BLUETOOTH, cellular, radio, etc.) link or a wired link. If present, communications interface 1580 may be in communication with processor 1560, such as to provide a signal to processor 1560 to activate or deactivate one or more of the vibrotactile devices 1540.

Vibrotactile system 1500 may optionally include other subsystems and components, such as touch-sensitive pads 1590, pressure sensors, motion sensors, position sensors, lighting elements, and/or user interface elements (e.g., an on/off button, a vibration control element, etc.). During use, vibrotactile devices 1540 may be configured to be activated for a variety of different reasons, such as in response to the user's interaction with user interface elements, a signal from the motion or position sensors, a signal from the touch-sensitive pads 1590, a signal from the pressure sensors, a signal from the other device or system 1570, etc.

Although power source 1550, processor 1560, and communications interface 1580 are illustrated in FIG. 15 as being positioned in haptic device 1520, the present disclosure is not so limited. For example, one or more of power source 1550, processor 1560, or communications interface 1580 may be positioned within haptic device 1510 or within another wearable textile.

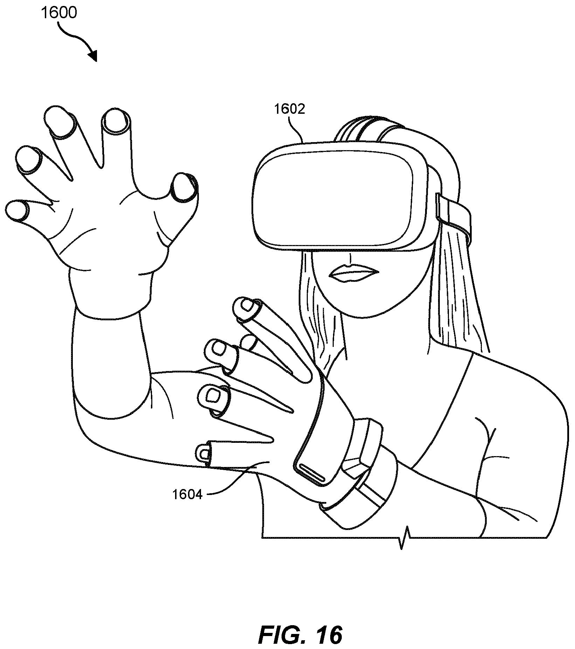

Haptic wearables, such as those shown in and described in connection with FIG. 15, may be implemented in a variety of types of artificial-reality systems and environments. FIG. 16 shows an example artificial-reality environment 1600 including one head-mounted virtual-reality display and two haptic devices (i.e., gloves), and in other embodiments any number and/or combination of these components and other components may be included in an artificial-reality system. For example, in some embodiments there may be multiple head-mounted displays each having an associated haptic device, with each head-mounted display and each haptic device communicating with the same console, portable computing device, or other computing system.

Head-mounted display 1602 generally represents any type or form of virtual-reality system, such as virtual-reality system 1400 in FIG. 14. Haptic device 1604 generally represents any type or form of wearable device, worn by a user of an artificial-reality system, that provides haptic feedback to the user to give the user the perception that he or she is physically engaging with a virtual object. In some embodiments, haptic device 1604 may provide haptic feedback by applying vibration, motion, and/or force to the user. For example, haptic device 1604 may limit or augment a user's movement. To give a specific example, haptic device 1604 may limit a user's hand from moving forward so that the user has the perception that his or her hand has come in physical contact with a virtual wall. In this specific example, one or more actuators within the haptic device may achieve the physical-movement restriction by pumping fluid into an inflatable bladder of the haptic device. In some examples, a user may also use haptic device 1604 to send action requests to a console. Examples of action requests include, without limitation, requests to start an application and/or end the application and/or requests to perform a particular action within the application.

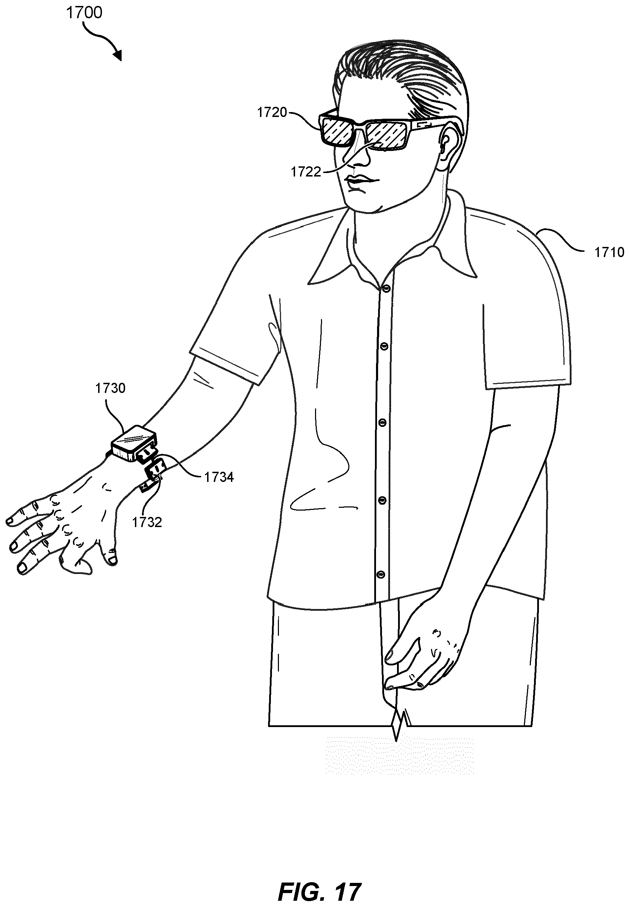

While haptic interfaces may be used with virtual-reality systems, as shown in FIG. 16, haptic interfaces may also be used with augmented-reality systems, as shown in FIG. 17. FIG. 17 is a perspective view of a user 1710 interacting with an augmented-reality system 1700. In this example, user 1710 may wear a pair of augmented-reality glasses 1720 that may have one or more displays 1722 and that are paired with a haptic device 1730. In this example, haptic device 1730 may be a wristband that includes a plurality of band elements 1732 and a tensioning mechanism 1734 that connects band elements 1732 to one another.

One or more of band elements 1732 may include any type or form of actuator suitable for providing haptic feedback. For example, one or more of band elements 1732 may be configured to provide one or more of various types of cutaneous feedback, including vibration, force, traction, texture, and/or temperature. To provide such feedback, band elements 1732 may include one or more of various types of actuators. In one example, each of band elements 1732 may include a vibrotactor (e.g., a vibrotactile actuator) configured to vibrate in unison or independently to provide one or more of various types of haptic sensations to a user. Alternatively, only a single band element or a subset of band elements may include vibrotactors.

Haptic devices 1510, 1520, 1604, and 1730 may include any suitable number and/or type of haptic transducer, sensor, and/or feedback mechanism. For example, haptic devices 1510, 1520, 1604, and 1730 may include one or more mechanical transducers, piezoelectric transducers, and/or fluidic transducers. Haptic devices 1510, 1520, 1604, and 1730 may also include various combinations of different types and forms of transducers that work together or independently to enhance a user's artificial-reality experience. In one example, each of band elements 1732 of haptic device 1730 may include a vibrotactor (e.g., a vibrotactile actuator) configured to vibrate in unison or independently to provide one or more of various types of haptic sensations to a user.

In some embodiments, the systems described herein may also include an eye-tracking subsystem designed to identify and track various characteristics of a user's eye(s), such as the user's gaze direction. The phrase "eye tracking" may, in some examples, refer to a process by which the position, orientation, and/or motion of an eye is measured, detected, sensed, determined, and/or monitored. The disclosed systems may measure the position, orientation, and/or motion of an eye in a variety of different ways, including through the use of various optical-based eye-tracking techniques, ultrasound-based eye-tracking techniques, etc. An eye-tracking subsystem may be configured in a number of different ways and may include a variety of different eye-tracking hardware components or other computer-vision components. For example, an eye-tracking subsystem may include a variety of different optical sensors, such as two-dimensional (2D) or 3D cameras, time-of-flight depth sensors, single-beam or sweeping laser rangefinders, 3D LiDAR sensors, and/or any other suitable type or form of optical sensor. In this example, a processing subsystem may process data from one or more of these sensors to measure, detect, determine, and/or otherwise monitor the position, orientation, and/or motion of the user's eye(s).

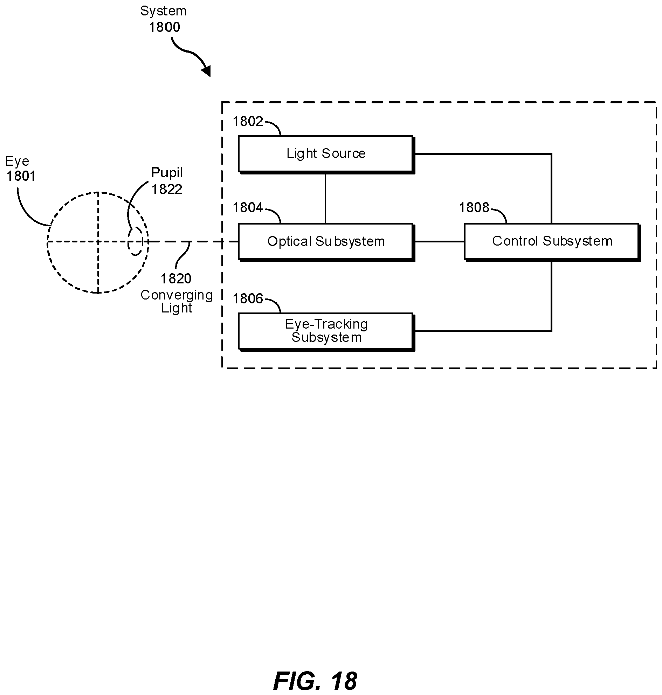

FIG. 18 is an illustration of an exemplary system 1800 that incorporates an eye-tracking subsystem capable of tracking a user's eye(s). As depicted in FIG. 18, system 1800 may include a light source 1802, an optical subsystem 1804, an eye-tracking subsystem 1806, and/or a control subsystem 1808. In some examples, light source 1802 may generate light for an image (e.g., to be presented to an eye 1801 of the viewer). Light source 1802 may represent any of a variety of suitable devices. For example, light source 1802 can include a two-dimensional projector (e.g., a LCoS display), a scanning source (e.g., a scanning laser), or other device (e.g., an LCD, an LED display, an OLED display, an active-matrix OLED display (AMOLED), a transparent OLED display (TOLED), a waveguide, or some other display capable of generating light for presenting an image to the viewer). In some examples, the image may represent a virtual image, which may refer to an optical image formed from the apparent divergence of light rays from a point in space, as opposed to an image formed from the light ray's actual divergence.

In some embodiments, optical subsystem 1804 may receive the light generated by light source 1802 and generate, based on the received light, converging light 1820 that includes the image. In some examples, optical subsystem 1804 may include any number of lenses (e.g., Fresnel lenses, convex lenses, concave lenses), apertures, filters, mirrors, prisms, and/or other optical components, possibly in combination with actuators and/or other devices. In particular, the actuators and/or other devices may translate and/or rotate one or more of the optical components to alter one or more aspects of converging light 1820. Further, various mechanical couplings may serve to maintain the relative spacing and/or the orientation of the optical components in any suitable combination.

In one embodiment, eye-tracking subsystem 1806 may generate tracking information indicating a gaze angle of an eye 1801 of the viewer. In this embodiment, control subsystem 1808 may control aspects of optical subsystem 1804 (e.g., the angle of incidence of converging light 1820) based at least in part on this tracking information. Additionally, in some examples, control subsystem 1808 may store and utilize historical tracking information (e.g., a history of the tracking information over a given duration, such as the previous second or fraction thereof) to anticipate the gaze angle of eye 1801 (e.g., an angle between the visual axis and the anatomical axis of eye 1801). In some embodiments, eye-tracking subsystem 1806 may detect radiation emanating from some portion of eye 1801 (e.g., the cornea, the iris, the pupil, or the like) to determine the current gaze angle of eye 1801. In other examples, eye-tracking subsystem 1806 may employ a wavefront sensor to track the current location of the pupil.

Any number of techniques can be used to track eye 1801. Some techniques may involve illuminating eye 1801 with infrared light and measuring reflections with at least one optical sensor that is tuned to be sensitive to the infrared light. Information about how the infrared light is reflected from eye 1801 may be analyzed to determine the position(s), orientation(s), and/or motion(s) of one or more eye feature(s), such as the cornea, pupil, iris, and/or retinal blood vessels.

In some examples, the radiation captured by a sensor of eye-tracking subsystem 1806 may be digitized (i.e., converted to an electronic signal). Further, the sensor may transmit a digital representation of this electronic signal to one or more processors (for example, processors associated with a device including eye-tracking subsystem 1806). Eye-tracking subsystem 1806 may include any of a variety of sensors in a variety of different configurations. For example, eye-tracking subsystem 1806 may include an infrared detector that reacts to infrared radiation. The infrared detector may be a thermal detector, a photonic detector, and/or any other suitable type of detector. Thermal detectors may include detectors that react to thermal effects of the incident infrared radiation.

In some examples, one or more processors may process the digital representation generated by the sensor(s) of eye-tracking subsystem 1806 to track the movement of eye 1801. In another example, these processors may track the movements of eye 1801 by executing algorithms represented by computer-executable instructions stored on non-transitory memory. In some examples, on-chip logic (e.g., an application-specific integrated circuit or ASIC) may be used to perform at least portions of such algorithms. As noted, eye-tracking subsystem 1806 may be programmed to use an output of the sensor(s) to track movement of eye 1801. In some embodiments, eye-tracking subsystem 1806 may analyze the digital representation generated by the sensors to extract eye rotation information from changes in reflections. In one embodiment, eye-tracking subsystem 1806 may use corneal reflections or glints (also known as Purkinje images) and/or the center of the eye's pupil 1822 as features to track over time.

In some embodiments, eye-tracking subsystem 1806 may use the center of the eye's pupil 1822 and infrared or near-infrared, non-collimated light to create corneal reflections. In these embodiments, eye-tracking subsystem 1806 may use the vector between the center of the eye's pupil 1822 and the corneal reflections to compute the gaze direction of eye 1801. In some embodiments, the disclosed systems may perform a calibration procedure for an individual (using, e.g., supervised or unsupervised techniques) before tracking the user's eyes. For example, the calibration procedure may include directing users to look at one or more points displayed on a display while the eye-tracking system records the values that correspond to each gaze position associated with each point.

In some embodiments, eye-tracking subsystem 1806 may use two types of infrared and/or near-infrared (also known as active light) eye-tracking techniques: bright-pupil and dark-pupil eye tracking, which may be differentiated based on the location of an illumination source with respect to the optical elements used. If the illumination is coaxial with the optical path, then eye 1801 may act as a retroreflector as the light reflects off the retina, thereby creating a bright pupil effect similar to a red-eye effect in photography. If the illumination source is offset from the optical path, then the eye's pupil 1822 may appear dark because the retroreflection from the retina is directed away from the sensor. In some embodiments, bright-pupil tracking may create greater iris/pupil contrast, allowing more robust eye tracking with iris pigmentation, and may feature reduced interference (e.g., interference caused by eyelashes and other obscuring features). Bright-pupil tracking may also allow tracking in lighting conditions ranging from total darkness to a very bright environment.

In some embodiments, control subsystem 1808 may control light source 1802 and/or optical subsystem 1804 to reduce optical aberrations (e.g., chromatic aberrations and/or monochromatic aberrations) of the image that may be caused by or influenced by eye 1801. In some examples, as mentioned above, control subsystem 1808 may use the tracking information from eye-tracking subsystem 1806 to perform such control. For example, in controlling light source 1802, control subsystem 1808 may alter the light generated by light source 1802 (e.g., by way of image rendering) to modify (e.g., pre-distort) the image so that the aberration of the image caused by eye 1801 is reduced.

The disclosed systems may track both the position and relative size of the pupil (since, e.g., the pupil dilates and/or contracts). In some examples, the eye-tracking devices and components (e.g., sensors and/or sources) used for detecting and/or tracking the pupil may be different (or calibrated differently) for different types of eyes. For example, the frequency range of the sensors may be different (or separately calibrated) for eyes of different colors and/or different pupil types, sizes, and/or the like. As such, the various eye-tracking components (e.g., infrared sources and/or sensors) described herein may need to be calibrated for each individual user and/or eye.

The disclosed systems may track both eyes with and without ophthalmic correction, such as that provided by contact lenses worn by the user. In some embodiments, ophthalmic correction elements (e.g., adjustable lenses) may be directly incorporated into the artificial reality systems described herein. In some examples, the color of the user's eye may necessitate modification of a corresponding eye-tracking algorithm. For example, eye-tracking algorithms may need to be modified based at least in part on the differing color contrast between a brown eye and, for example, a blue eye.

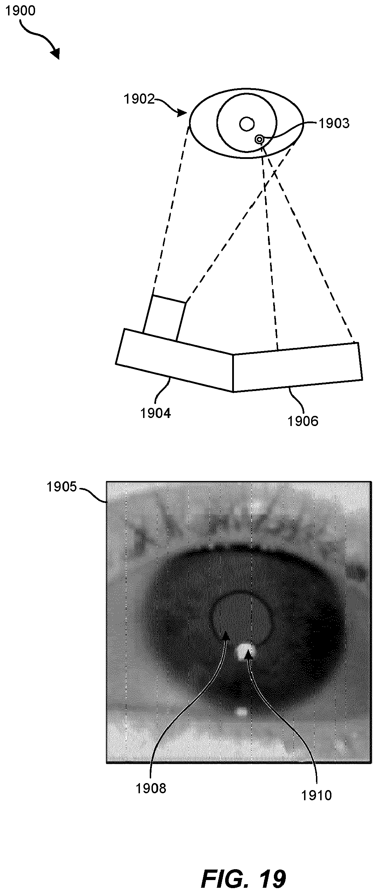

FIG. 19 is a more detailed illustration of various aspects of the eye-tracking subsystem illustrated in FIG. 18. As shown in this figure, an eye-tracking subsystem 1900 may include at least one source 1904 and at least one sensor 1906. Source 1904 generally represents any type or form of element capable of emitting radiation. In one example, source 1904 may generate visible, infrared, and/or near-infrared radiation. In some examples, source 1904 may radiate non-collimated infrared and/or near-infrared portions of the electromagnetic spectrum towards an eye 1902 of a user. Source 1904 may utilize a variety of sampling rates and speeds. For example, the disclosed systems may use sources with higher sampling rates in order to capture fixational eye movements of a user's eye 1902 and/or to correctly measure saccade dynamics of the user's eye 1902. As noted above, any type or form of eye-tracking technique may be used to track the user's eye 1902, including optical-based eye-tracking techniques, ultrasound-based eye-tracking techniques, etc.

Sensor 1906 generally represents any type or form of element capable of detecting radiation, such as radiation reflected off the user's eye 1902. Examples of sensor 1906 include, without limitation, a charge coupled device (CCD), a photodiode array, a complementary metal-oxide-semiconductor (CMOS) based sensor device, and/or the like. In one example, sensor 1906 may represent a sensor having predetermined parameters, including, but not limited to, a dynamic resolution range, linearity, and/or other characteristic selected and/or designed specifically for eye tracking.

As detailed above, eye-tracking subsystem 1900 may generate one or more glints. As detailed above, a glint 1903 may represent reflections of radiation (e.g., infrared radiation from an infrared source, such as source 1904) from the structure of the user's eye. In various embodiments, glint 1903 and/or the user's pupil may be tracked using an eye-tracking algorithm executed by a processor (either within or external to an artificial reality device). For example, an artificial reality device may include a processor and/or a memory device in order to perform eye tracking locally and/or a transceiver to send and receive the data necessary to perform eye tracking on an external device (e.g., a mobile phone, cloud server, or other computing device).

FIG. 19 shows an example image 1905 captured by an eye-tracking subsystem, such as eye-tracking subsystem 1900. In this example, image 1905 may include both the user's pupil 1908 and a glint 1910 near the same. In some examples, pupil 1908 and/or glint 1910 may be identified using an artificial-intelligence-based algorithm, such as a computer-vision-based algorithm. In one embodiment, image 1905 may represent a single frame in a series of frames that may be analyzed continuously in order to track the eye 1902 of the user. Further, pupil 1908 and/or glint 1910 may be tracked over a period of time to determine a user's gaze.

In one example, eye-tracking subsystem 1900 may be configured to identify and measure the inter-pupillary distance (IPD) of a user. In some embodiments, eye-tracking subsystem 1900 may measure and/or calculate the IPD of the user while the user is wearing the artificial reality system. In these embodiments, eye-tracking subsystem 1900 may detect the positions of a user's eyes and may use this information to calculate the user's IPD.

As noted, the eye-tracking systems or subsystems disclosed herein may track a user's eye position and/or eye movement in a variety of ways. In one example, one or more light sources and/or optical sensors may capture an image of the user's eyes. The eye-tracking subsystem may then use the captured information to determine the user's inter-pupillary distance, interocular distance, and/or a 3D position of each eye (e.g., for distortion adjustment purposes), including a magnitude of torsion and rotation (i.e., roll, pitch, and yaw) and/or gaze directions for each eye. In one example, infrared light may be emitted by the eye-tracking subsystem and reflected from each eye. The reflected light may be received or detected by an optical sensor and analyzed to extract eye rotation data from changes in the infrared light reflected by each eye.

The eye-tracking subsystem may use any of a variety of different methods to track the eyes of a user. For example, a light source (e.g., infrared light-emitting diodes) may emit a dot pattern onto each eye of the user. The eye-tracking subsystem may then detect (e.g., via an optical sensor coupled to the artificial reality system) and analyze a reflection of the dot pattern from each eye of the user to identify a location of each pupil of the user. Accordingly, the eye-tracking subsystem may track up to six degrees of freedom of each eye (i.e., 3D position, roll, pitch, and yaw) and at least a subset of the tracked quantities may be combined from two eyes of a user to estimate a gaze point (i.e., a 3D location or position in a virtual scene where the user is looking) and/or an IPD.

In some cases, the distance between a user's pupil and a display may change as the user's eye moves to look in different directions. The varying distance between a pupil and a display as viewing direction changes may be referred to as "pupil swim" and may contribute to distortion perceived by the user as a result of light focusing in different locations as the distance between the pupil and the display changes. Accordingly, measuring distortion at different eye positions and pupil distances relative to displays and generating distortion corrections for different positions and distances may allow mitigation of distortion caused by pupil swim by tracking the 3D position of a user's eyes and applying a distortion correction corresponding to the 3D position of each of the user's eyes at a given point in time. Thus, knowing the 3D position of each of a user's eyes may allow for the mitigation of distortion caused by changes in the distance between the pupil of the eye and the display by applying a distortion correction for each 3D eye position. Furthermore, as noted above, knowing the position of each of the user's eyes may also enable the eye-tracking subsystem to make automated adjustments for a user's IPD.

In some embodiments, a display subsystem may include a variety of additional subsystems that may work in conjunction with the eye-tracking subsystems described herein. For example, a display subsystem may include a varifocal subsystem, a scene-rendering module, and/or a vergence-processing module. The varifocal subsystem may cause left and right display elements to vary the focal distance of the display device. In one embodiment, the varifocal subsystem may physically change the distance between a display and the optics through which it is viewed by moving the display, the optics, or both. Additionally, moving or translating two lenses relative to each other may also be used to change the focal distance of the display. Thus, the varifocal subsystem may include actuators or motors that move displays and/or optics to change the distance between them. This varifocal subsystem may be separate from or integrated into the display subsystem. The varifocal subsystem may also be integrated into or separate from its actuation subsystem and/or the eye-tracking subsystems described herein.

In one example, the display subsystem may include a vergence-processing module configured to determine a vergence depth of a user's gaze based on a gaze point and/or an estimated intersection of the gaze lines determined by the eye-tracking subsystem. Vergence may refer to the simultaneous movement or rotation of both eyes in opposite directions to maintain single binocular vision, which may be naturally and automatically performed by the human eye. Thus, a location where a user's eyes are verged is where the user is looking and is also typically the location where the user's eyes are focused. For example, the vergence-processing module may triangulate gaze lines to estimate a distance or depth from the user associated with intersection of the gaze lines. The depth associated with intersection of the gaze lines may then be used as an approximation for the accommodation distance, which may identify a distance from the user where the user's eyes are directed. Thus, the vergence distance may allow for the determination of a location where the user's eyes should be focused and a depth from the user's eyes at which the eyes are focused, thereby providing information (such as an object or plane of focus) for rendering adjustments to the virtual scene.

The vergence-processing module may coordinate with the eye-tracking subsystems described herein to make adjustments to the display subsystem to account for a user's vergence depth. When the user is focused on something at a distance, the user's pupils may be slightly farther apart than when the user is focused on something close. The eye-tracking subsystem may obtain information about the user's vergence or focus depth and may adjust the display subsystem to be closer together when the user's eyes focus or verge on something close and to be farther apart when the user's eyes focus or verge on something at a distance.

The eye-tracking information generated by the above-described eye-tracking subsystems may also be used, for example, to modify various aspect of how different computer-generated images are presented. For example, a display subsystem may be configured to modify, based on information generated by an eye-tracking subsystem, at least one aspect of how the computer-generated images are presented. For instance, the computer-generated images may be modified based on the user's eye movement, such that if a user is looking up, the computer-generated images may be moved upward on the screen. Similarly, if the user is looking to the side or down, the computer-generated images may be moved to the side or downward on the screen. If the user's eyes are closed, the computer-generated images may be paused or removed from the display and resumed once the user's eyes are back open.

The above-described eye-tracking subsystems can be incorporated into one or more of the various artificial reality systems described herein in a variety of ways. For example, one or more of the various components of system 1800 and/or eye-tracking subsystem 1900 may be incorporated into augmented-reality system 1300 in FIG. 13 and/or virtual-reality system 1400 in FIG. 14 to enable these systems to perform various eye-tracking tasks (including one or more of the eye-tracking operations described herein).

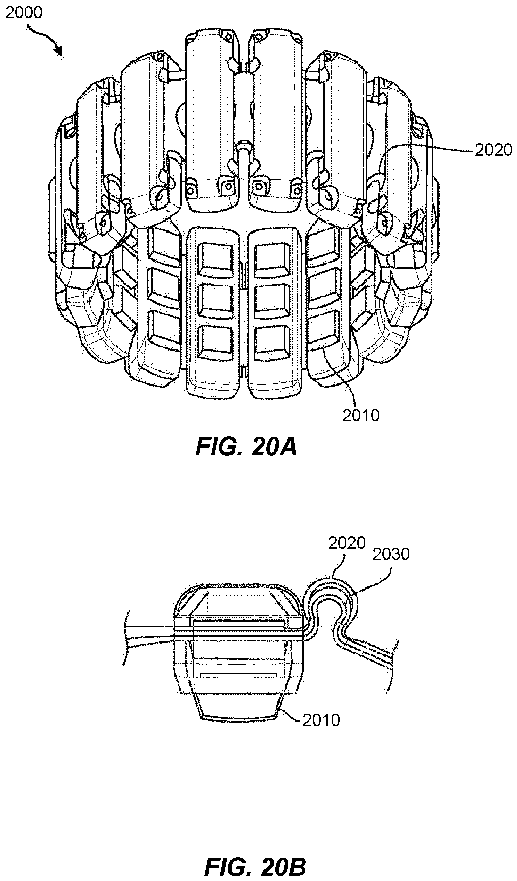

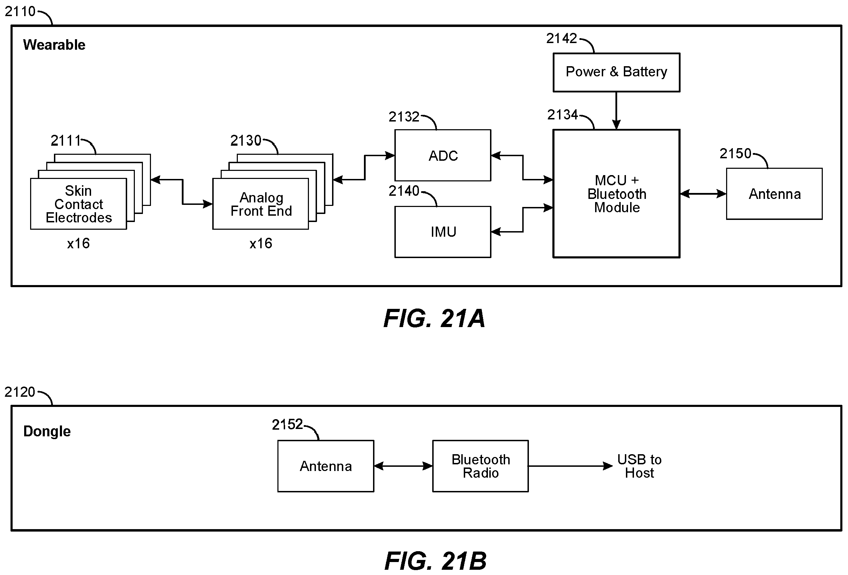

FIG. 20A illustrates an exemplary human-machine interface (also referred to herein as an EMG control interface) configured to be worn around a user's lower arm or wrist as a wearable system 2000. In this example, wearable system 2000 may include sixteen neuromuscular sensors 2010 (e.g., EMG sensors) arranged circumferentially around an elastic band 2020 with an interior surface 2030 configured to contact a user's skin. However, any suitable number of neuromuscular sensors may be used. The number and arrangement of neuromuscular sensors may depend on the particular application for which the wearable device is used. For example, a wearable armband or wristband can be used to generate control information for controlling an augmented reality system, a robot, controlling a vehicle, scrolling through text, controlling a virtual avatar, or any other suitable control task. As shown, the sensors may be coupled together using flexible electronics incorporated into the wireless device. FIG. 20B illustrates a cross-sectional view through one of the sensors of the wearable device shown in FIG. 20A. In some embodiments, the output of one or more of the sensing components can be optionally processed using hardware signal processing circuitry (e.g., to perform amplification, filtering, and/or rectification). In other embodiments, at least some signal processing of the output of the sensing components can be performed in software. Thus, signal processing of signals sampled by the sensors can be performed in hardware, software, or by any suitable combination of hardware and software, as aspects of the technology described herein are not limited in this respect. A non-limiting example of a signal processing chain used to process recorded data from sensors 2010 is discussed in more detail below with reference to FIGS. 21A and 21B.

FIGS. 21A and 21B illustrate an exemplary schematic diagram with internal components of a wearable system with EMG sensors. As shown, the wearable system may include a wearable portion 2110 (FIG. 21A) and a dongle portion 2120 (FIG. 21B) in communication with the wearable portion 2110 (e.g., via BLUETOOTH or another suitable wireless communication technology). As shown in FIG. 21A, the wearable portion 2110 may include skin contact electrodes 2111, examples of which are described in connection with FIGS. 20A and 20B. The output of the skin contact electrodes 2111 may be provided to analog front end 2130, which may be configured to perform analog processing (e.g., amplification, noise reduction, filtering, etc.) on the recorded signals. The processed analog signals may then be provided to analog-to-digital converter 2132, which may convert the analog signals to digital signals that can be processed by one or more computer processors. An example of a computer processor that may be used in accordance with some embodiments is microcontroller (MCU) 2134, illustrated in FIG. 21A. As shown, MCU 2134 may also include inputs from other sensors (e.g., IMU sensor 2140), and power and battery module 2142. The output of the processing performed by MCU 2134 may be provided to antenna 2150 for transmission to dongle portion 2120 shown in FIG. 21B.

Dongle portion 2120 may include antenna 2152, which may be configured to communicate with antenna 2150 included as part of wearable portion 2110. Communication between antennas 2150 and 2152 may occur using any suitable wireless technology and protocol, non-limiting examples of which include radiofrequency signaling and BLUETOOTH. As shown, the signals received by antenna 2152 of dongle portion 2120 may be provided to a host computer for further processing, display, and/or for effecting control of a particular physical or virtual object or objects.

Although the examples provided with reference to FIGS. 20A-20B and FIGS. 21A-21B are discussed in the context of interfaces with EMG sensors, the techniques described herein for reducing electromagnetic interference can also be implemented in wearable interfaces with other types of sensors including, but not limited to, mechanomyography (MMG) sensors, sonomyography (SMG) sensors, and electrical impedance tomography (EIT) sensors. The techniques described herein for reducing electromagnetic interference can also be implemented in wearable interfaces that communicate with computer hosts through wires and cables (e.g., USB cables, optical fiber cables, etc.).

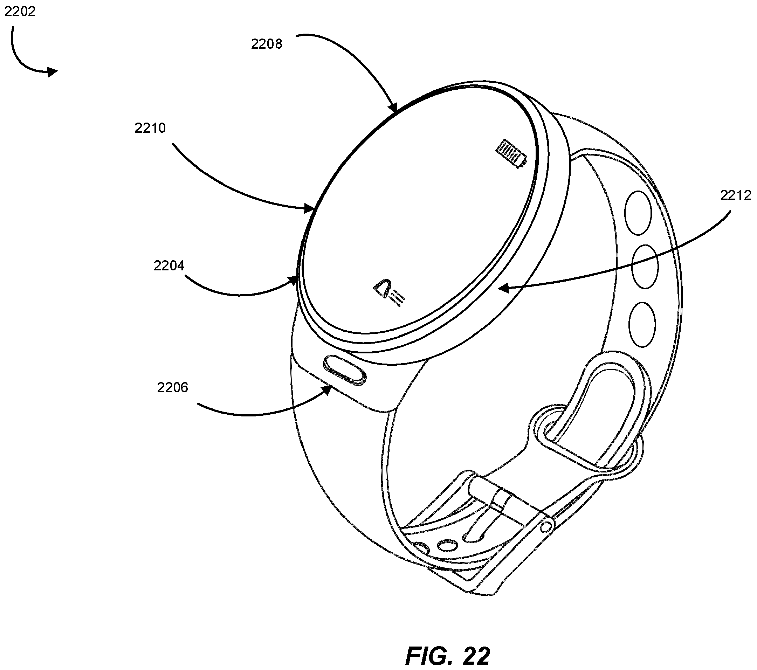

FIG. 22 illustrates an exemplary smartwatch 2202 that may incorporate embodiments of the present disclosure. As shown, smartwatch 2202 may include a battery 2204 that powers one or more loads of smartwatch 2202. In this example, loads of smartwatch may include a microphone 2206, a speaker 2208, a thermometer 2210, and/or a central processing unit 2212.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. For example, one or more of the modules recited herein may receive a voltage measurement to be transformed, transform the voltage measurement into a charging or discharging threshold, output a result of the transformation to a bi-directional converter, and use the result of the transformation to charge and/or discharge a secondary energy-storing element while maintaining a power-rail voltage based on the charging or discharging threshold. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some embodiments, the term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the appended claims. The embodiments disclosed herein should be considered in all respects illustrative and not restrictive. Reference should be made to the appended claims in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. An extended-reality system comprising:
a power rail;
a load electrically coupled to the power rail;
a primary energy-storing element operable to provide power to the load via the power rail;
a bi-directional converter electrically coupled to the power rail; and
a secondary energy-storing element electrically coupled to the bi-directional converter and operable to:
discharge by supplying power to the power rail through the bi-directional converter when a voltage of the power rail is at or below a discharging threshold value; and
charge by extracting power from the power rail through the bi-directional converter when the voltage of the power rail is at or above a charging threshold value.

2. The extended-reality system of claim 1, wherein the discharging threshold value or the charging threshold value is a predetermined fixed threshold value.

3. The extended-reality system of claim 1 or claim 2, wherein:
the primary energy-storing element comprises a battery having an internal resistance;
the secondary energy-storing element comprises one or more capacitors; and
the discharging threshold value is variable and based at least in part on a voltage of the battery that excludes a voltage drop resulting from the internal resistance;
optionally, further comprising a threshold controller operable to set the discharging threshold value based at least in part on the greater of:
a difference between the voltage of the battery and a predetermined delta; or
a predetermined minimum threshold value.

4. The extended-reality system of any preceding claim, wherein:
the secondary energy-storing element comprises one or more capacitors; and
the extended-reality system further comprises a threshold controller operable to:
monitor a voltage of the one or more capacitors; and
set the discharging threshold value based at least in part on a sum of:
a predetermined minimum voltage; and
a product of a predetermined factor and the voltage of the one or more capacitors.

5. The extended-reality system of any preceding claim, wherein:
the power rail comprises a segment between the bi-directional converter and the load;
the segment has a direct-current resistance;
the voltage of the power rail is a voltage at an end of the segment closest to the bi-directional converter; and
the extended-reality system further comprises a threshold controller operable to:
monitor a current in the segment;
monitor the voltage at the end of the segment closest to the bi-directional converter; and one or more of the following:
(i) set the discharging threshold value based at least in part on a sum of:
a predetermined voltage; and
a product of the current in the segment and the direct-current resistance;
(ii) set the charging threshold value based at least in part on a difference between:
a predetermined voltage; and
a product of the current in the segment and the direct-current resistance.

6. The extended-reality system of any preceding claim, wherein:
the primary energy-storing element comprises a battery; and one or more of the following:
(i) the extended-reality system further comprises a linear charger operable to charge the battery;
the linear charger has a dropout voltage; and
the bi-directional converter supplies an input voltage to the linear charger substantially equal to a sum of the dropout voltage of the linear charger and a voltage of the battery;
(ii) the bi-directional converter is operable to supply a constant current or a constant voltage to charge the battery.

7. The extended-reality system of any preceding claim, further comprising:
an eyewear front frame; and
an eyewear temple coupled to the eyewear front frame, wherein:
the load comprises a display element integrated into the eyewear front frame;
and one or more of the following:
(i) the primary energy-storing element comprises a battery integrated into a distal portion of the eyewear temple; and the power rail extends from the battery through the eyewear temple to the display element;
(ii) the bi-directional converter is integrated into a distal portion of the eyewear temple; and the power rail extends from the bi-directional converter through the eyewear temple to the display element.

8. The extended-reality system of any preceding claim, further comprising an eyewear front frame, wherein:
the load comprises a display element integrated into a left portion of the eyewear front frame;
the secondary energy-storing element comprises a bank of capacitors integrated into a right portion of the eyewear front frame; and
the power rail extends from the display element across a bridge portion of the eyewear front frame to the bank of capacitors.

9. The extended-reality system of any preceding claim, further comprising an audio subsystem, wherein:
the secondary energy-storing element comprises one or more capacitors; and
the one or more capacitors form a portion of the audio subsystem.

10. A computer-implemented method comprising:
monitoring at least one attribute of a power subsystem of an extended-reality system comprising:
a power rail;
a load electrically coupled to the power rail;
a primary energy-storing element operable to provide power to the load via the power rail;
a bi-directional converter electrically coupled to the power rail; and
a secondary energy-storing element electrically coupled to the bi-directional converter and operable to:
discharge by supplying power to the power rail through the bi-directional converter when a voltage of the power rail is at or below a discharging threshold value; and
charge by extracting power from the power rail through the bi-directional converter when the voltage of the power rail is at or above a charging threshold value; and
setting at least one of the discharging threshold value or the charging threshold value based at least in part on the at least one attribute of the power subsystem.

11. The computer-implemented method of claim 10, wherein:
the primary energy-storing element comprises a battery having an internal resistance;
the at least one attribute of the power subsystem comprises a voltage of the battery that excludes a voltage drop resulting from the internal resistance; and
setting at least one of the discharging threshold value or the charging threshold value comprises setting the discharging threshold value equal to a difference between the voltage of the battery and a predetermined delta.

12. The computer-implemented method of claim 10 or claim 11, wherein:
the secondary energy-storing element comprises one or more capacitors;
monitoring the at least one attribute of the power subsystem of the extended-reality system comprises monitoring a voltage of the one or more capacitors; and
setting at least one of the discharging threshold value or the charging threshold value comprises setting the discharging threshold value based at least in part on a sum of:
a predetermined minimum voltage; and
a product of a predetermined factor and the voltage of the one or more capacitors.

13. The computer-implemented method of any one of claims 10 to 12, wherein:
the power rail comprises a segment between the bi-directional converter and the load;
the segment has a direct-current resistance;
the voltage of the power rail is a voltage at an end of the segment closest to the bi-directional converter; and
monitoring the at least one attribute of the power subsystem of the extended-reality system comprises:
monitoring a current in the segment; and
monitoring the voltage at the end of the segment closest to the bi-directional converter; and one or more of the following:
(i) setting at least one of the discharging threshold value or the charging threshold value comprises setting the discharging threshold value based at least in part on a sum of:
a predetermined voltage; and
a product of the current in the segment and the direct-current resistance;
(ii) setting at least one of the discharging threshold value or the charging threshold value comprises setting the charging threshold value based at least in part on a difference between:
a predetermined voltage; and
a product of the current in the segment and the direct-current resistance.

14. An apparatus comprising:
a bi-directional converter;
a power-rail connector electrically coupled to the bi-directional converter and configured to:
supply power from the bi-directional converter to a power rail; and
supply power to the bi-directional converter from the power rail;
a power-storage connector electrically coupled to the bi-directional converter and configured to:
supply power from the bi-directional converter to an energy-storing element; and
supply power to the bi-directional converter from the energy-storing element; and
a threshold controller operable to:
direct power from the power-storage connector to the power-rail connector through the bi-directional converter when a voltage of the power rail is at or below a discharging threshold value; and
direct power from the power-rail connector to the power-storage connector through the bi-directional converter when the voltage of the power rail is at or above a charging threshold value.

15. The apparatus of claim 14, wherein the threshold controller is further operable to update the discharging threshold value or the charging threshold value.
